# EUROPEAN PATENT SPECIFICATION

(11) **EP 3 713 337 B1**
(45) Date of publication and mention of the grant of the patent: **31.08.2022**
(21) Application number: 18877695.9
(22) Date of filing: 13.11.2018
(51) Int. Cl.: H04W 76/15, H04W 76/22, H04W 76/12, H04W 76/32, H04W 72/04, H04W 36/00

(54) **MESSAGE SENDING METHOD AND DEVICE, POLICY SENDING METHOD AND DEVICE, STORAGE MEDIUM, AND PROCESSOR**
VERFAHREN UND VORRICHTUNG ZUM SENDEN VON NACHRICHTEN, VERFAHREN UND VORRICHTUNG ZUM SENDEN VON RICHTLINIEN, SPEICHERMEDIUM UND PROZESSOR
PROCÉDÉ ET DISPOSITIF D'ENVOI DE MESSAGE, PROCÉDÉ ET DISPOSITIF D'ENVOI DE POLITIQUE, SUPPORT DE STOCKAGE, ET PROCESSEUR

(30) Priority: 17.11.2017 CN 201711145908
(43) Date of publication of application: 23.09.2020
(73) Proprietor: ZTE Corporation, Shenzhen, Guangdong 518057 (CN)
(72) Inventor: WANG, Xin, Shenzhen Guangdong 518057 (CN); HUANG, He, Shenzhen Guangdong 518057 (CN); MA, Zijiang, Shenzhen Guangdong 518057 (CN)
(74) Representative: Ricker, Mathias
(86) International application number: PCT/CN2018/115197
(87) International publication number: WO 2019/096117

(56) References cited:
- EP-A1- 2 919 519
- EP-A1- 3 125 640
- EP-A1- 3 190 846
- CN-A- 103 703 859
- CN-A- 105 228 263
- CN-A- 106 100 816
- GB-A- 2 520 923
- US-A1- 2016 212 790
- HUAWEI: "GTP-U Error Indication from SeNB", 3GPP DRAFT; R3-142195 GTP ERROR IN SENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Shanghai, P. R. China; 20141006 - 20141010 26 September 2014 (2014-09-26), XP050870709, Retrieved from the Internet: URL:http://www.3gpp.org/ftp/tsg_ran/WG3_Iu /TSGR3_85bis/Docs/ [retrieved on 2014-09-26]

## Description

### TECHNICAL FIELD

The present disclosure relates to the field of communications and, in particular, to a message sending method and device, a policy sending method and device, a storage medium, and a processor.

### BACKGROUND

In the related art, communication networks include a fourth generation (4G) communication system which is widely deployed and a fifth generation (5G) communication system which is initially deployed. A core network of the 4G system is an evolved packet core (EPC) network having a radio access network (RAN) in which an evolved node B (eNB) using an evolved universal terrestrial radio access (E-UTRA) on a radio interface is deployed. A core network of the 5G system is a 5G (5GC) core network having a RAN in which a next generation node B (gNB) using a new radio (NR) access on the radio interface, as well as a next generation eNB (ng-eNB), is deployed.

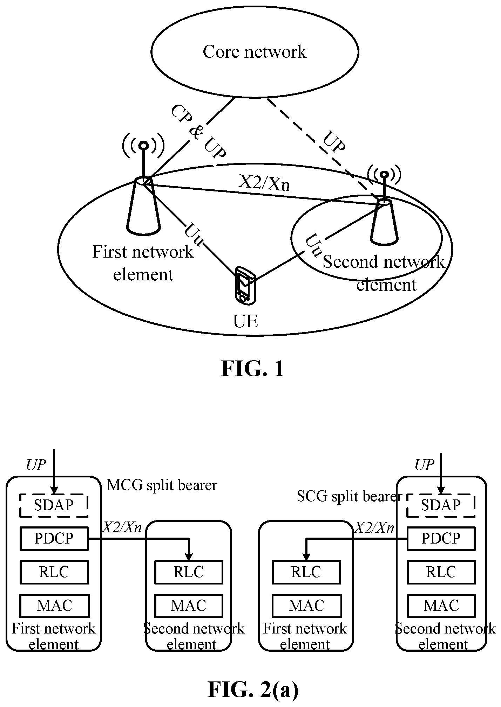

Among existing access networks, a network in which two NBs jointly provide communication services to a user equipment (UE) in a tightly coupled manner is called a dual connectivity (DC) network, as shown in FIG. 1. FIG. 1 is a schematic diagram of architecture of the DC network in the related art.

In the DC network, DRB is evolved and extended in terms of type and configuration. However, original concept of a NB service manner and a control plane signaling procedure in the related art is still maintained. For example, as long as a second network element shares a data transmission of the UE, the second network element will establish at least a DRB lower-layer entity (a RLC entity and a MAC entity), and at the same time, the second network element will also establish at least one serving cell for the UE; further, the second network element may also establish an SRB (referred to as SRB3) between the second network element and the UE. For a SCG bearer and a SCG split bearer, when the second network element decides to release at least one DRB, the second network element will instruct to release all L2 protocol stacks in the second network element for the SCG bearer or SCG split bearer. From the perspective of the UE, after accessing the second network element, the UE will also keep monitoring the serving cell of the second network element so as to detect a possible radio link failure. It may be seen that the existing communication manner and signaling procedure do not match an evolved bearer type (such as a bearer type with the splitted upper-layer protocol entity and lower-layer protocol entity), and it is difficult for the access network to achieve a hierarchical and highly flexible radio resource management.

In view of the above technical problems in the related art, no effective scheme has been proposed at present.

The EP 3 125 640 Alrelates to a bearer management apparatus and method, and a communication system. The method includes a user equipment receives an indication message, sent by a base station, for changing a bearer type of a bearer or releasing the bearer under dual connectivity; and changes the bearer type of the bearer or releases the bearer according to the indication message. The EP 3 190 846 A1 relates to a base station and a data transfer method. The base station in a master cell group is configured to establish a bearer to a mobile station together with a base station in a secondary cell group for communication.

The Document HUAWEI: "GTP-U Error Indication from SeNB", 3GPP DRAFT; R3-142195 GTP ERROR IN SENB, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG3, no. Shanghai, P. R. China; 20141006-20141010 26 September 2014, XP050870709 relates to the issue and solution on the GTP error indication from the SeNB.

### SUMMARY

Embodiments of the present disclosure provide a message sending method and device, a policy sending method and device, a storage medium, and a processor, according to the independent claims, to at least solve a problem in the related art that the management of radio resources on a network element is not flexible.

According to the present disclosure, a message sending method is provided The message sending method includes: it is determined to release or modify a first data radio bearer or a designated network element; and a first message is sent to a first network element. The first message carries a cause value for releasing or modifying the first data radio bearer or the designated network element. The cause value is used for the first network element to perform reconfiguration management of a bearer type of the first data radio bearer or a bearer type of a data radio bearer on the designated network element.

Optionally, the cause value includes at least one of a first cause value, a second cause value or a third cause value. The first cause value is used for indicating that a wireless channel quality between the designated network element and a terminal is lower than a first predetermined threshold. The second cause value is used for indicating that a load of a packet data convergence protocol (PDCP) entity and/or a service data adaptation protocol (SDAP) entity of the designated network element is greater than a second predetermined threshold. The third cause value is used for indicating that a radio resource load of the designated network element is greater than a third predetermined threshold. The designated network element is a sender of the first message.

Optionally, in a case where the cause value includes the first cause value, the bearer type of the first data radio bearer or the bearer type of the data radio bearer on the designated network element is one of: a secondary cell group (SCG) bearer, a SCG split bearer, a main cell group (MCG) split bearer or a MCG inter-NB bearer; in a case where the cause value includes the second cause value, the bearer type of the first data radio bearer or the bearer type of the data radio bearer on the designated network element is one of: the SCG bearer, the SCG split bearer or a SCG inter-NB bearer; and in a case where the cause value includes the third cause value, the bearer type of the first data radio bearer or the bearer type of the data radio bearer on the designated network element is one of: the SCG bearer or the MCG inter-NB bearer.

Optionally, after the first message is sent to the first network element, the method further includes: a second message sent by the first network element is received. The second message carries a policy for the first network element to perform the reconfiguration management of the bearer type of the first data radio bearer or the bearer type of the data radio bearer on the designated network element.

Optionally, the policy includes at least one of: in a case where the designated network element needs to be retained and the cause value includes the first cause value, the bearer type of the first data radio bearer or the bearer type of the data radio bearer on the designated network element is reconfigured to be a SCG inter-NB bearer or a MCG bearer; in a case where the designated network element needs to be retained and the cause value includes the second cause value, the bearer type of the first data radio bearer or the bearer type of the data radio bearer on the designated network element is reconfigured to be one of following three bearer types: the MCG bearer, a MCG split bearer or a MCG inter-NB bearer; in a case where the designated network element needs to be retained and the cause value includes the third cause value, the bearer type of the first data radio bearer or the bearer type of the data radio bearer on the designated network element is reconfigured to be the MCG split bearer or a SCG split bearer; the bearer type of the first data radio bearer or the bearer type of the data radio bearer on the designated network element is released; the designated network element is released; and the designated network element is switched.

Optionally, the method further includes: in a case where the bearer type of all data radio bearers established by the designated network element for a designated user equipment is a SCG inter-NB bearer, whether to establish or delete at least one object of following objects is determined: a lower-layer entity, a serving cell, or a signaling radio bearer between the designated network element and the designated user equipment. The lower-layer entity includes a radio link control (RLC) entity, and a medium access control (MAC) entity.

Optionally, whether to establish or delete the object is determined in at least one of following manners: whether to establish or delete the object is determined according to indication information sent by the first network element and used for indicating whether to establish or delete the object; whether to establish or delete the object is determined in accordance with a provision of a communication protocol; and whether to establish or delete the object is determined only by the designated network element.

Optionally, in a case where the indication information includes target cell information, it is determined to establish the object; in a case where the indication information does not include the target cell information, it is determined to not establish the object.

According to the present disclosure, a policy sending method is also provided The policy sending method includes: a first message sent by a designated network element is received, the first message carries a cause value determined by the designated network element and used for releasing or modifying a first data radio bearer or the designated network element; a policy of reconfiguration management of a bearer type of the first data radio bearer or a bearer type of a data radio bearer on the designated network element is determined according to the cause value; and the determined policy is sent to the designated network element.

Optionally, the cause value includes at least one of a first cause value, a second cause value or a third cause value. The first cause value is used for indicating that a wireless channel quality between the designated network element and a terminal is lower than a first predetermined threshold. The second cause value is used for indicating that a load of a packet data convergence protocol (PDCP) entity and/or a service data adaptation protocol (SDAP) entity of the designated network element is greater than a second predetermined threshold. The third cause value is used for indicating that a radio resource load of the designated network element is greater than a third predetermined threshold.

Optionally, in a case where the cause value includes the first cause value, the bearer type of the first data radio bearer or the bearer type of the data radio bearer on the designated network element is one of: a secondary cell group (SCG) bearer, a SCG split bearer, a main cell group (MCG) split bearer or a MCG inter-NB bearer; in a case where the cause value includes the second cause value, the bearer type of the first data radio bearer or the bearer type of the data radio bearer on the designated network element is one of: the SCG bearer, the SCG split bearer or a SCG inter-NB bearer; and in a case where the cause value includes the third cause value, the bearer type of the first data radio bearer or the bearer type of the data radio bearer on the designated network element is one of: the SCG bearer or the MCG inter-NB bearer.

Optionally, the step that the policy of the reconfiguration management of the bearer type of the first data radio bearer or the bearer type of the data radio bearer on the designated network element is determined, includes at least one of: in a case where the designated network element needs to be retained and the cause value includes the first cause value, the bearer type of the first data radio bearer or the bearer type of the data radio bearer on the designated network element is reconfigured to be a SCG inter-NB bearer or a MCG bearer; in a case where the designated network element needs to be retained and the cause value includes the second cause value, the bearer type of the first data radio bearer or the bearer type of the data radio bearer on the designated network element is reconfigured to be one of following three bearer types: the MCG bearer, a MCG split bearer or a MCG inter-NB bearer; in a case where the designated network element needs to be retained and the cause value includes the third cause value, the bearer type of the first data radio bearer or the bearer type of the data radio bearer on the designated network element is reconfigured to be the MCG split bearer or a SCG split bearer; the bearer type of the first data radio bearer or the bearer type of the data radio bearer on the designated network element is released; the designated network element is released; and the designated network element is switched.

Optionally, the method further includes: in a case where the bearer type of all data radio bearers established by the designated network element for a designated user equipment is a SCG inter-NB bearer, a message for instructing the designated network element whether to establish or delete at least one object of following objects is sent to the designated network element: a lower-layer entity, a serving cell, or a signaling radio bearer between the designated network element and the designated user equipment. The lower-layer entity includes a radio link control (RLC) entity and a medium access control (MAC) entity.

According to the present disclosure, a message sending device is also provided The message sending device includes a first determination module and a sending module. The first determination module is configured to determine to release or modify a first data radio bearer or a designated network element. The sending module is configured to send a first message to a first network element. The first message carries a cause value for releasing or modifying the first data radio bearer or the designated network element. The cause value is used for the first network element to perform reconfiguration management of a bearer type of the first data radio bearer or a bearer type of a data radio bearer on the designated network element.

Optionally, the device further includes a receiving module. The receiving module is configured to receive a second message sent by the first network element. The second message carries a policy for the first network element to perform the reconfiguration management of the bearer type of the first data radio bearer or the bearer type of the data radio bearer on the designated network element.

Optionally, the device further includes a second determination module. The second determination module is configured to, in a case where the bearer type of all data radio bearers established by the designated network element for a designated user equipment is a SCG inter-NB bearer, determine whether to establish or delete at least one object of following objects: a lower-layer entity, a serving cell, or a signaling radio bearer between the designated network element and the designated user equipment. The lower-layer entity includes a radio link control (RLC) entity and a medium access control (MAC) entity.

According to the present disclosure, a policy sending device is also provided The policy sending device includes a receiving module, a determination module and a first sending module. The receiving module is configured to receive a first message sent by a designated network element, where the first message carries a cause value determined by the designated network element and used for releasing or modifying a first data radio bearer or the designated network element. The determination module is configured to determine, according to the cause value, a policy of reconfiguration management of a bearer type of the first data radio bearer or a bearer type of a data radio bearer on the designated network element. The first sending module is configured to send the determined policy to the designated network element. Optionally, the device further includes a second sending module. The second sending module is configured to, in a case where the bearer type of all data radio bearers established by the designated network element for a designated user equipment is a SCG inter-NB bearer, send, to the designated network element, a message for instructing the designated network element whether to establish or delete at least one object of following objects: a lower-layer entity, a serving cell, or a signaling radio bearer between the designated network element and the designated user equipment. The lower-layer entity includes a radio link control (RLC) entity and a medium access control (MAC) entity.

According to the present disclosure, a storage medium is further provided The storage medium includes a stored program, and the program is executed to perform the method of any one of the foregoing.

According to the present disclosure, a processor is further provided. The processor is configured to run a program, and the program is executed to perform the method of any one of the foregoing.

According to the present disclosure, it is determined to release or modify the first data radio bearer or the designated network element; and the first message is sent to the first network element, where the first message carries the cause value for releasing or modifying the first data radio bearer or the designated network element, such that the first network element may perform the reconfiguration management of the bearer type of the first data radio bearer or the bearer type of the data radio bearer on the designated network element based on this cause value. By means of the above manners, it is applicable to the evolution and extension of the data radio bearer, the flexible management of a radio resource of the designated network element or the sender of the first message may be achieved, and therefore, a problem in the related art that the management of radio resources on the network element is not flexible is solved, and the effect of improving the utilization rate of the resource of the designated network element or the sender of the first message is achieved.

### BRIEF DESCRIPTION OF DRAWINGS

The drawings described herein are used to provide a further understanding of the present disclosure and constitute a part of the present application. The exemplary embodiments of the present disclosure and the description thereof are used to explain the present disclosure, and do not constitute an improper limitation on the present disclosure. Among the drawings:
FIG. 1 is a schematic diagram of architecture of a DC network in the related art;
FIG. 2(a) is a schematic diagram of a bearer type of a DRB being a MCG split bearer and a SCG split bearer;
FIG. 2(b) is a schematic diagram of a bearer type of a DRB being a MCG bearer and a SCG bearer;
FIG. 2(c) is a schematic diagram of a bearer type of a DRB being a MCG inter-NB bearer and a SCG inter-NB bearer;
FIG. 3 is a flowchart of a message sending method;
FIG. 4 is a flowchart of a policy sending method;
FIG. 5 is a structural block diagram of a message sending device;
FIG. 6 is a structural block diagram of a policy sending device;
FIG. 7 is a flowchart of a method according to the present disclosure;
FIG. 8 is a flowchart of a further method according to the present disclosure;
FIG. 9 is a flowchart of a further method according to the present disclosure; and
FIG. 10 is a flowchart of a further method according to the present disclosure.

### DETAILED DESCRIPTION

Hereinafter, the present disclosure will be described in detail with reference to the drawings and in conjunction with embodiments. It should be noted that, in a case of no conflict, the embodiments and the features in the embodiments in the present application may be combined with each other.

It should be noted that the terms "first" and "second" and the like in the description and claims and the above-described drawings of the present disclosure are used to distinguish between similar objects, and are not necessarily used to describe a specific order or sequence.

In a DC network, a base station that establishes a control plane (CP) interface for a UE between a core network and the UE is referred to as a master node (MN), which may also be referred to as a first network element. Another base station that only provides an additional radio resource for the UE is referred to as a secondary node (SN), which may also be referred to as a second network element. At least one of the first network element and second network element will establish a user plane (UP) interface for the UE between the first network element or the second network element and the core network, and the two network elements are usually connected through a non-ideal wired interface (referred to as a X2 interface or a Xn interface); on a radio interface, the two network elements may use the same or different radio access technology (RAT), where a network mode of using different RATs is referred to as a multi RAT dual connectivity (MR-DC) network.

From the perspective of a wireless protocol stack, a layer 2 (L2) protocol stack of a radio bearer (RB) mainly includes a packet data convergence protocol (PDCP) entity, a radio link control (RLC) entity and a medium access control (MAC) entity. For the signaling RB (SRB) of the CP, there is also a radio resource control (RRC) entity on the L2 protocol stack of the signaling RB. If the core network currently accessed by the UE is 5GC, then for a data RB (DRB) of the UP, the complete L2 protocol stack of the DRB further includes a service data adaptation protocol (SDAP) entity located on the PDCP entity.

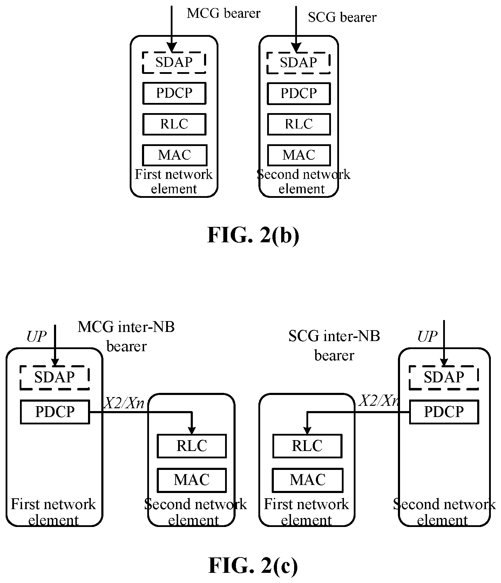

In the DC network, the DRB may be classified into different bearer types according to different distribution configurations of the L2 protocol stack. For example, the L2 protocol stack of a certain DRB may be configured on two serving network elements respectively, which is specifically shown in FIG. 2(a). FIG. 2(a) is a schematic diagram of a bearer type of the DRB being a MCG split bearer and a SCG split bearer. The DRB is configured with two sets of RLC and MAC entities, which are relatively independently located on the two serving network elements. An UP interface is terminated on the first network element, and a DRB in which the PDCP entity (optionally, further including an SDAP entity) is located in the first network element is referred to as a master cell group (MCG) split bearer; an UP interface is terminated on the second network element, and a DRB in which the PDCP entity (optionally, further including the SDAP entity) is located in the second network element is referred to as a secondary cell group (SCG) split bearer. Alternatively, the L2 protocol stack of a certain DRB may also be completely configured on only one serving network element, as shown in FIG. 2(b). FIG. 2(b) is a schematic diagram of a bearer type of the DRB being a MCG bearer and a SCG bearer. The UP interface is terminated on the first network element, and a DRB in which the L2 protocol stack is only completely located on the first network element is referred to as a master cell group (MCG) bearer; and the UP interface is terminated on the second network element, and a DRB in which the L2 protocol stack is only completely located on the second network element is referred to as a secondary cell group (SCG) bearer.

For market consideration and research and development consideration, the above four DRB bearer types are designed in a manner of a harmonisation, i.e., the UE does not distinguish the access network network element corresponding to the PDCP entity (and optionally the SDAP entity), and the bearer type may be configured with an NR PDCP entity, which also means that the MCG split bearer and the SCG split bearer are of the same bearer type for the UE, put another way, the PDCP entity (and optionally the SDAP entity, both of which are referred to as an upper-layer entity in this patent) is decoupled to some extent from the RLC entity and the MAC entity (both of which are referred to as a lower-layer entity in this patent).

Further, with the emergence of the SCG Split bearer and the generation of an upper/lower-layer entity decoupling concept, application space is reserved for at least two other DRB bearer types. As shown in FIG. 2 (c), FIG. 2 (c) is a schematic diagram of a bearer type of the DRB being a MCG inter-NB bearer and a SCG inter-NB bearer. The UP interface is terminated on the first network element, and a DRB in which the lower-layer entity in the L2 protocol stack is only completely located in the second network element is referred to as a main cell group (MCG) inter-NB bearer; the UP interface is terminated on the second network element, and a DRB in which the lower-layer entity of the L2 protocol stack is only completely located in the first network element is referred to as a secondary cell group (SCG) inter-NB bearer.

The invention consists in:a message sending method, comprising determining (S302) to release or modify a first data radio bearer or a designated network element, and sending (S304) a first message to a first network element, wherein the first message carries a cause value for releasing or modifying the first data radio bearer or the designated network element, the cause value is used for the first network element to perform reconfiguration management of a bearer type of the first data radio bearer or a bearer type of a data radio bearer on the designated network clement, characterized in that the method further comprises in a case where the bearer type of all data radio bearers established by the designated network element for a designated user equipment is a secondary cell group, SCG, inter-NB, which is a DRB bearer having a UP interface terminated on the second network element, bearer, and a lower-layer entity of the L2 protocol stack only and completely located in the first network element,determining whether to establish or delete at least one object of following objects a low'er-layer entity, a serving cell, or a signaling radio bearer between the designated network element and the designated user equipment, wherein the lower-layer entity comprises a radio link control, RLC, entity, and a medium access control, MAC, entity.The invention consists also in a policy sending method comprising receiving (S402) a first message sent by a designated network element, wherein the first message carries a cause value determined by the designated network element and used for releasing or modifying a first data radio bearer or the designated network element. determining (S404), according to the cause value, a policy of reconfiguration management of a bearer type of the first data radio bearer or a bearer type of a data radio bearer on the designated network element, and sending (S406) the determined policy to the designated network element; characterized in that the method further comprises: in a case where the bearer type of all data radio bearers established by the designated network element for a designated user equipment is a secondary cell group, SCG, inter-NB, which is a DRB bearer having a UP interface terminated on the second network element, bearer, ^{®} and a lower-layer entity of the L2 protocol stack only and completely located in the first network element,sending, to the designated network element, a message for instructing the designated network element whether to establish or delete at least one object of following objects a lower-layer entity, a serving cell, or a signaling radio bearer between the designated network element and the designated user equipment, wherein the lower-layer entity comprises a radio link control, RLC, entity, and a medium access control, MAC, entity.The invention further consists in a message sending device and in a policy sending device corresponding to the two above methods of the invention.The invention further consists in storage media containing a program corresponding to the two above methods of the invention as well in a processor configured to run a program corresponding to the two above methods of the invention.

The following "example(s)"/"aspect(s)"/"embodiment(s)"/"invention(s)" mentioned in the remaining part of the description are not according to the invention as defined in the claims and are present for illustration purposes only.

Based on the extension of the type of the above data radio bearer, the present application provides the following schemes of several embodiments.

### Embodiment 1

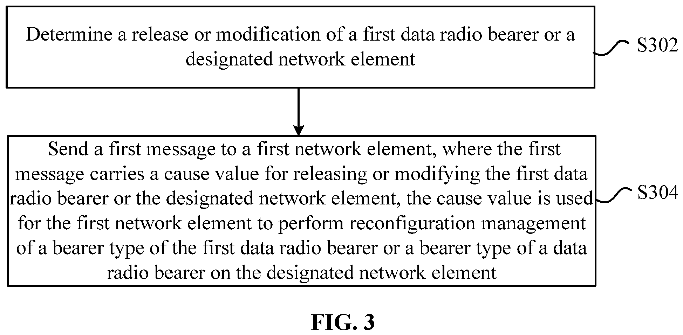

In this embodiment, a message sending method implemented on architecture shown in FIG. 1 is provided. FIG. 3 is a flowchart of a message sending method according to an embodiment of the present disclosure. As shown in FIG. 3, the process includes steps described below.

In step S302, it is determined to release or modify a first data radio bearer or a designated network element.

In step S304, a first message is sent to a first network element, where the first message carries a cause value for releasing or modifying the first data radio bearer or the designated network element, the cause value is used for the first network element to perform reconfiguration management of a bearer type of the first data radio bearer or a bearer type of a data radio bearer on the designated network element.

Through the above steps, i.e., it is determined to release or modify the first data radio bearer or the designated network element; and the first message is sent to the first network element, where the first message carries the cause value for releasing or modifying the first data radio bearer or the designated network element, such that the first network element may perform the reconfiguration management of the bearer type of the first data radio bearer or the bearer type of the data radio bearer on the designated network element based on this cause value, which is applicable to the evolution and extension of the data radio bearer and achieves the flexible management of a radio resource of the designated network element or a sender of the first message; therefore, a problem in the related art that the management of the radio resource on the network element is not flexible is solved, and the effect of improving the utilization rate of the resource of the designated network element or the sender of the first message is achieved.

It should be noted that the data radio bearer on the above-described designated network element may refer to part data radio bearer or all data radio bearers on the above-described designated network element, but is not limited thereto. It should be noted that the part data radio bearer may be one or more data radio bearers.

It should be noted that the above-described cause value may include at least one of: a first cause value, which is used for indicating that a wireless channel quality between the designated network element and a terminal is lower than a first predetermined threshold; a second cause value, which is used for indicating that a load of a packet data convergence protocol (PDCP), entity and/or a service data adaptation protocol (SDAP), entity of the designated network element is greater than a second predetermined threshold; or a third cause value, which is used for indicating that a radio resource load of the designated network element is greater than a third predetermined threshold; where the designated network element is a sender of the first message.

It should be noted that the designated network element described above may be the second network element shown in FIG. 1.

It should be noted that if the wireless channel quality between the designated network element and the terminal is lower than the first predetermined threshold, it may be considered as a poor wireless channel quality (poor air interface quality); if the load of the PDCP entity and/or the SDAP entity of the designated network element is greater than the second predetermined threshold, it may be considered as a PDCP overload or an SDAP overload; if the radio resource load of the designated network element is greater than the third predetermined threshold, it may be considered as a UE lost. That is, the first cause value described above may be the poor air interface quality, the second cause value described above may be the PDCP overload or SDAP overload, and the third cause value described above may be the UE lost.

It should be noted that, in a case where the above-described cause value includes the first cause value, the bearer type of the first data radio bearer or the bearer type of the data radio bearer on the designated network element is one of: a secondary cell group (SCG) bearer, a SCG split bearer, a main cell group (MCG) split bearer, or a MCG inter-NB bearer; in a case where the cause value includes the second cause value, the bearer type of the first data radio bearer or the bearer type of the data radio bearer on the designated network element is one of: the SCG bearer, the SCG split bearer, or a SCG inter-NB bearer; and in a case where the cause value includes the third cause value, the bearer type of the first data radio bearer or the bearer type of the data radio bearer on the designated network element is one of: the SCG bearer or the MCG inter-NB bearer.

In an embodiment of the present disclosure, after the above step S304, the above-described method may further include: a second message sent by the first network element is received, where the second message carries a policy for the first network element to perform the reconfiguration management of the bearer type of the first data radio bearer or the bearer type of the data radio bearer on the designated network element.

It should be noted that the above-described policy includes at least one of: in a case where the designated network element needs to be retained and the cause value includes the first cause value, the bearer type of the first data radio bearer or the bearer type of the data radio bearer on the designated network element is reconfigured to be a SCG inter-NB bearer or a MCG bearer; in a case where the designated network element needs to be retained and the cause value includes the second cause value, the bearer type of the first data radio bearer or the bearer type of the data radio bearer on the designated network element is reconfigured to be one of following three bearer types: the MCG bearer, a MCG split bearer or a MCG inter-NB bearer; in a case where the designated network element needs to be retained and the cause value includes the third cause value, the bearer type of the first data radio bearer or the bearer type of the data radio bearer on the designated network element is reconfigured to be the MCG split bearer or a SCG split bearer; the bearer type of the first data radio bearer or the bearer type of the data radio bearer on the designated network element is released; the designated network element is released; and the designated network element is switched.

It should be noted that the reconfiguration of the above-described bearer types may be represented as the release or reconfiguration of entities in the designated network element; for example, the reconfiguration of the bearer type of the data radio bearer from the SCG bearer to the SCG inter-NB bearer may be represented as: release of the upper-layer entity of the data radio bearer in the designated network element, and reconfiguration of the upper-layer entity into the first network element. The reconfiguration of the bearer type of other data radio bearers is similar and will not be described herein again.

In the embodiments of the present disclosure, the above-described method further includes: in a case where the bearer type of all data radio bearers established by the designated network element for a designated user equipment is a SCG inter-NB bearer, whether to establish or delete at least one object of following objects is determined: a lower-layer entity, a serving cell, or a signaling radio bearer between the designated network element and the designated user equipment, where the lower-layer entity includes a radio link control (RLC) entity and a medium access control (MAC) entity.

It should be noted that the execution order of determining whether to establish or delete the above-described objects may be performed before or after the above-mentioned step S304, or may be performed simultaneously with the step S304, but it is not limited to this.

It should be noted that the above-described establishing may be represented as that the above-described objects are established again on a basis that the above-described objects are not established by the designated network element, or may be represented as that the above-described objects have been established on the designated network element and the above-described object needs to be added, but it is not limited thereto.

It should be noted that whether to establish or delete the object is determined in at least one of following manners: whether to establish or delete the object is determined according to indication information sent by the first network element and used for indicating whether to establish or delete the object; whether to establish or delete the object is determined in accordance with a provision of a communication protocol; and whether to establish or delete the object is determined only by the designated network element.

It should be noted that whether the object is established or not may be directly indicated through the above-described indication information, and whether the object is established or not may also be indicated in an implicit manner, for example, whether the object is established or not may be determined by determining whether target cell information appears in the indication information or not. Specifically, in a case where the indication information includes the target cell information, it is determined to establish the object; in a case where the indication information does not include the target cell information, it is determined to not establish the object.

It should be noted that the above steps may be implemented in an adding or modifying procedure of the second network element, but is not limited thereto.

It should be noted that the execution subject of the above steps may be the above-described second network element shown in FIG. 1, but is not limited thereto.

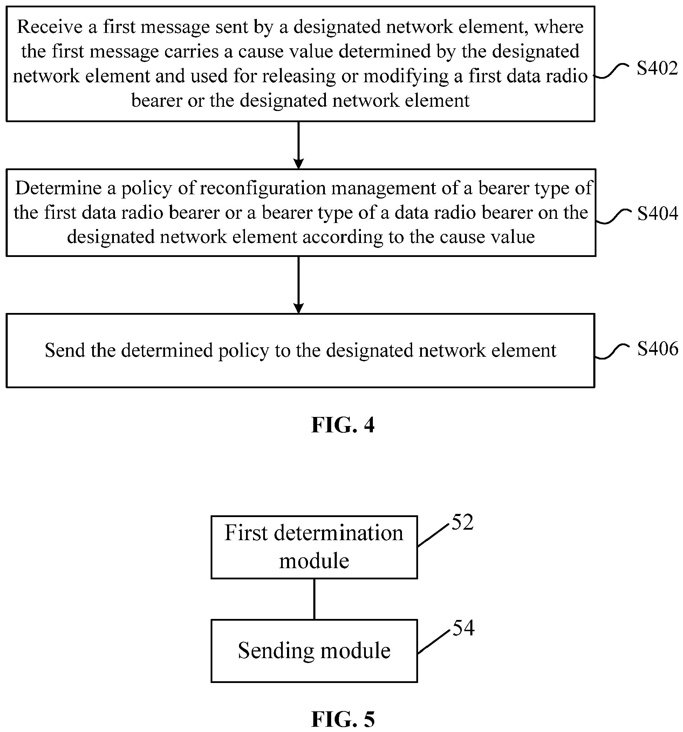

An embodiment of the present disclosure provides a policy sending method. FIG. 4 is a flowchart of a policy sending method according to an embodiment of the present disclosure. As shown in FIG. 4, the process includes steps described below.

In step S402, a first message sent by a designated network element is received, where the first message carries a cause value determined by the designated network element and used for releasing or modifying a first data radio bearer or the designated network element.

In step S404, a policy of reconfiguration management of a bearer type of the first data radio bearer or a bearer type of a data radio bearer on the designated network element is determined according to the cause value.

In step S406, the determined policy is sent to the designated network element.

Through the above-mentioned steps, i.e., the first message sent by the designated network element is received, where the first message carries the cause value determined by the designated network element and used for releasing or modifying the first data radio bearer or the designated network element, such that the reconfiguration management may be performed on the bearer type of the first data radio bearer or the bearer type of the data radio bearer on the designated network element based on this cause value, it is applicable to the evolution and extension of the data radio bearer, the flexible management of a radio resource of the designated network element or a sender of the first message is achieved, and therefore, a problem in the related art that the management of the radio resource on the network element is not flexible is solved, and the effect of improving the utilization rate of the resource of the designated network element or the sender of the first message is achieved.

It should be noted that the above-described designated network element may be the above-described second network element.

It should be noted that the data radio bearer on the above-described designated network element may refer to part data radio bearer or all data radio bearers on the above-described designated network element, and is not limited thereto. It should be noted that the part data radio bearer may be one or more data radio bearers.

It should be noted that the above-described cause value may include at least one of: a first cause value, which is used for indicating that a wireless channel quality between the designated network element and a terminal is lower than a first predetermined threshold; a second cause value, which is used for indicating that a load of a packet data convergence protocol (PDCP), entity and/or a service data adaptation protocol (SDAP), entity of the designated network element is greater than a second predetermined threshold; or a third cause value, which is used for indicating that a radio resource load of the designated network element is greater than a third predetermined threshold.

It should be noted that if the wireless channel quality between the designated network element and the terminal is lower than the first predetermined threshold, it may be considered as a poor wireless channel quality (poor air interface quality); if the load of the PDCP entity and/or the SDAP entity of the designated network element is greater than the second predetermined threshold, it may be considered as a PDCP overload or an SDAP overload; if the radio resource load of the designated network element is greater than the third predetermined threshold, it may be considered as a UE lost. That is, the first cause value described above may be the poor air interface quality, the second cause value described above may be the PDCP overload or SDAP overload, and the third cause value described above may be the UE lost.

It should be noted that, in a case where the above-described cause value includes the first cause value, the bearer type of the first data radio bearer or the bearer type of the data radio bearer on the designated network element is one of: a secondary cell group (SCG) bearer, a SCG split bearer, a main cell group (MCG) split bearer, or a MCG inter-NB bearer; in a case where the cause value includes the second cause value, the bearer type of the first data radio bearer or the bearer type of the data radio bearer on the designated network element is one of: the SCG bearer, the SCG split bearer or a SCG inter-NB bearer; and in a case where the cause value includes the third cause value, the bearer type of the first data radio bearer or the bearer type of the data radio bearer on the designated network element is one of: the SCG bearer or the MCG inter-NB bearer.

In an embodiment of the present disclosure, the above step S404 may include at least one of: in a case where the designated network element needs to be retained and the cause value includes the first cause value, the bearer type of the first data radio bearer or the bearer type of the data radio bearer on the designated network element is reconfigured to be a SCG inter-NB bearer or a MCG bearer; in a case where the designated network element needs to be retained and the cause value includes the second cause value, the bearer type of the first data radio bearer or the bearer type of the data radio bearer on the designated network element is reconfigured to be one of following three bearer types: the MCG bearer, a MCG split bearer or a MCG inter-NB bearer; in a case where the designated network element needs to be retained and the cause value includes the third cause value, the bearer type of the first data radio bearer or the bearer type of the data radio bearer on the designated network element is reconfigured to be the MCG split bearer or a SCG split bearer; the bearer type of the first data radio bearer or the bearer type of the data radio bearer on the designated network element is released; the designated network element is released; and the designated network element is switched.

It should be noted that the reconfiguration of the above-described bearer types may be represented as the release or reconfiguration of entities in the designated network element, for example, the reconfiguration of the bearer type of the data radio bearer from the SCG bearer to the SCG inter-NB bearer, or may be represented as the release of the upper-layer entity of the data radio bearer in the designated network element, and as the reconfiguration of the upper-layer entity into the network element of a receiver of the first message. The reconfiguration of the bearer type of other data radio bearers is similar and will not be described herein again.

In the embodiment corresponding to Fig. 4, the above-described method further includes: in a case where the bearer type of all data radio bearers established by the designated network element for a designated user equipment is a SCG inter-NB bearer, a message for instructing the designated network element whether to establish or delete at least one object of following objects is sent to the designated network element: a lower-layer entity, a serving cell, or a signaling radio bearer between the designated network element and the designated user equipment, where the lower-layer entity includes a radio link control (RLC) entity and a medium access control (MAC) entity.

It should be noted that the above-described establishing may be represented as that the above-described objects are established again on a basis that the above-described objects are not established by the designated network element, or may be represented as that the above-described objects have been established on the designated network element and the above-described object needs to be added, but it is not limited thereto.

It should be noted that whether the object is established or not may be directly indicated through the above-described information, and whether the object is established or not may also be indicated in an implicit manner, for example, whether the object is established or not may be determined by determining whether target cell information appears in the indication information or not. Specifically, in a case where the indication information includes the target cell information, it is determined to establish the object; in a case where the indication information does not include the target cell information, it is determined to not establish the object.

It should be noted that whether to establish or delete the object is determined in at least one of following manners: whether to establish or delete the object is determined according to indication information sent by the first network element and used for indicating whether to establish or delete the object; whether to establish or delete the object is determined in accordance with a provision of a communication protocol; and whether to establish or delete the object is determined only by the designated network element.

It should be noted that the above steps may be implemented in an adding or modifying procedure of the second network element, but is not limited thereto.

It should be noted that the execution subject of the above steps may be the above-described second network element shown in FIG. 1, but is not limited thereto.

Through the description of the above embodiments, those skilled in the art can clearly understand that the method according to the above embodiments may be implemented by means of software plus a necessary universal hardware platform, and of course, may also be implemented by hardware, but in many cases the former is a better implementation. Based on this understanding, the technical scheme of the present disclosure, either essentially or in terms of contributions to the related art, may be embodied in the form of a software product, which is stored in a storage medium (such as a ROM/RAM, a magnetic disk, an optical disc), and includes several instructions for causing a terminal device (which may be a mobile phone, a computer, a server, or a network device, etc.) to perform the methods described in the embodiments of the present disclosure.

### Embodiment 2

A message sending device is also provided in this embodiment, and the device is used to implement the foregoing embodiments and preferred implementations, and the description will not be repeated. As used below, the term "module" may be a combination of software and/or hardware that implements a predetermined function. Although the devices described in the following embodiments are preferably implemented in software, implementations in hardware or in a combination of software and hardware are also possible and conceived.

FIG. 5 is a structural block diagram of a message sending device according to an embodiment of the present disclosure. As shown in FIG. 5, the device includes a first determination module 52 and a sending module 54. The first determination module 52 is configured to determine to release or modify a first data radio bearer or a designated network element. The sending module 54 is connected to the first determination module 52 described above and is configured to send a first message to a first network element, where the first message carries a cause value for releasing or modifying the first data radio bearer or the designated network element; the cause value is used for the first network element to perform reconfiguration management of a bearer type of the first data radio bearer or a bearer type of a data radio bearer on the designated network element.

By means of the above-described device, it is determined to release or modify the first data radio bearer or the designated network element; and the first message is sent to the first network element, where the first message carries the cause value for releasing or modifying the first data radio bearer or the designated network element, such that the first network element may perform the reconfiguration management of the bearer type of the first data radio bearer or the bearer type of the data radio bearer on the designated network element based on this cause value, it is applicable to the evolution and extension of the data radio bearer, the flexible management of a radio resource of the designated network element or a sender of the first message is achieved, and therefore, a problem that, in the related art, the management of the radio resource on the network element is not flexible is solved, and the effect of improving the utilization rate of the resource of the designated network element or the sender of the first message is achieved.

It should be noted that the data radio bearer on the above-described designated network element may refer to part data radio bearer or all data radio bearers on the above-described designated network element, and is not limited thereto. It should be noted that the part data radio bearer may be one or more data radio bearers.

It should be noted that the above-described cause value may include at least one of: a first cause value, which is used for indicating that a wireless channel quality between the designated network element and a terminal is lower than a first predetermined threshold; a second cause value, which is used for indicating that a load of a packet data convergence protocol (PDCP), entity and/or a service data adaptation protocol (SDAP), entity of the designated network element is greater than a second predetermined threshold; or a third cause value, which is used for indicating that a radio resource load of the designated network element is greater than a third predetermined threshold; where the designated network element is a sender of the first message.

It should be noted that the sender of the first message described above may be the above-described device, or may be the second network element shown in FIG. 1.

It should be noted that if the wireless channel quality between the designated network element and the terminal is lower than the first predetermined threshold, it may be considered as a poor wireless channel quality (poor air interface quality); if the load of the PDCP entity and/or the SDAP entity of the designated network element is greater than the second predetermined threshold, it may be considered as a PDCP overload or an SDAP overload; if the radio resource load of the designated network element is greater than the third predetermined threshold, it may be considered as a UE lost. That is, the first cause value described above may be the poor air interface quality, the second cause value described above may be the PDCP overload or SDAP overload, and the third cause value described above may be the UE lost.

It should be noted that, in a case where the above-described cause value includes the first cause value, the bearer type of the first data radio bearer or the bearer type of the data radio bearer on the designated network element is one of: a secondary cell group (SCG) bearer, a SCG split bearer, a main cell group (MCG) split bearer, or a MCG inter-NB bearer; in a case where the cause value includes the second cause value, the bearer type of the first data radio bearer or the bearer type of the data radio bearer on the designated network element is one of: the SCG bearer, the SCG split bearer, or a SCG inter-NB bearer; and in a case where the cause value includes the third cause value, the bearer type of the first data radio bearer or the bearer type of the data radio bearer on the designated network element is one of: the SCG bearer or the MCG inter-NB bearer.

In an embodiment of the present disclosure, the above-described device may further include a receiving module. The receiving module is connected to the sending module 54 and configured to receive a second message sent by the first network element, where the second message carries a policy for the first network element to perform the reconfiguration management of the bearer type of the first data radio bearer or the bearer type of the data radio bearer on the designated network element.

It should be noted that the above-described policy includes at least one of: in a case where the designated network element needs to be retained and the cause value includes the first cause value, the bearer type of the first data radio bearer or the bearer type of the data radio bearer on the designated network element is reconfigured to be a SCG inter-NB bearer or a MCG bearer; in a case where the designated network element needs to be retained and the cause value includes the second cause value, the bearer type of the first data radio bearer or the bearer type of the data radio bearer on the designated network element is reconfigured to be one of following three bearer types: the MCG bearer; a MCG split bearer or a MCG inter-NB bearer; in a case where the designated network element needs to be retained and the cause value includes the third cause value, the bearer type of the first data radio bearer or the bearer type of the data radio bearer on the designated network element is reconfigured to be the MCG split bearer or a SCG split bearer; the bearer type of the first data radio bearer or the bearer type of the data radio bearer on the designated network element is released; the designated network element is released; and the designated network element is switched.

It should be noted that the reconfiguration of the above-described bearer types may be represented as the release or reconfiguration of entities in the designated network element; for example, the reconfiguration of the bearer type of the data radio bearer from the SCG bearer to the SCG inter-NB bearer may be represented as: release of the upper-layer entity of the data radio bearer in the designated network element, and reconfiguration of the upper-layer entity into the first network element. The reconfiguration of the bearer type of other data radio bearers is similar and will not be described herein again.

In the embodiments of the present disclosure, the above-described device further includes a second determination module. The second determination module is configured to: in a case where the bearer type of all data radio bearers established by the designated network element for a designated user equipment is a SCG inter-NB bearer, whether to establish or delete at least one object of following objects is determined: a lower-layer entity, a serving cell, or a signaling radio bearer between the designated network element and the designated user equipment, where the lower-layer entity includes a radio link control (RLC) entity and a medium access control (MAC) entity.

It should be noted that the above-described second determination module may be connected to the above-described sending module 54 or may not be connected to the above-described sending module 54, which is not limited thereto.

It should be noted that the above-described establishing may be represented as that the above-described objects are established again on a basis that the above-described objects are not established by the designated network element, or may be represented as that the above-described objects have been established on the designated network element and the above-described object needs to be added, but it is not limited thereto.

It should be noted that the above-described second determination module may determine whether to establish or delete the object in at least one of following manners: whether to establish or delete the object is determined according to indication information sent by the first network element and used for indicating whether to establish or delete the object; whether to establish or delete the object is determined in accordance with a provision of a communication protocol; and whether to establish or delete the object is determined only by the designated network element.

It should be noted that whether the object is established or not may be directly indicated through the above-described indication information, and whether the object is established or not may also be indicated in an implicit manner, for example, whether the object is established or not may be determined by determining whether target cell information appears in the indication information or not. Specifically, in a case where the indication information includes the target cell information, it is determined to establish the object; in a case where the indication information does not include the target cell information, it is determined to not establish the object.

It should be noted that the above-described device may be located in the second network element shown in FIG. 1, but is not limited thereto.

It should be noted that the above modules may be implemented by software or hardware. For the latter, the above modules may be implemented in manners described below, but is not limited thereto: the above modules are located in a same processor; or the above modules are respectively positioned in different processors in any combination manner.

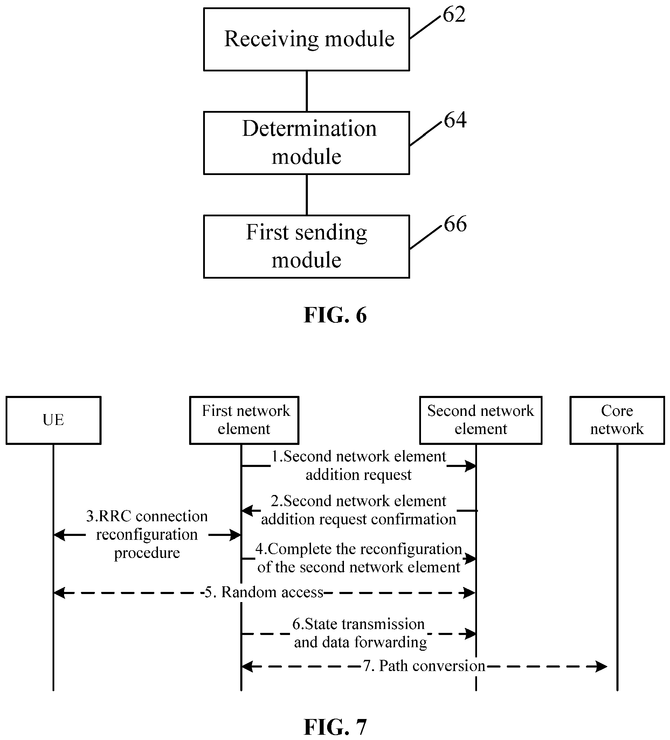

An embodiment of the present disclosure further provides a policy sending device. FIG. 6 is a structural block diagram of a policy sending device according to an embodiment of the present disclosure. As shown in FIG. 6, the device includes a receiving module 62, a determination module 64 and a first sending module 66. The receiving module 62 is configured to receive a first message sent by a designated network element, where the first message carries a cause value determined by the designated network element and used for releasing or modifying a first data radio bearer or the designated network element. The determination module 64 is connected to the above-described receiving module 62 and is configured to determine, according to the cause value, a policy of reconfiguration management of a bearer type of the first data radio bearer or a bearer type of a data radio bearer on the designated network element. The first sending module 66 is connected to the above-described determination module 64 and is configured to send the determined policy to the designated network element.

By means of the above-described device, the first message sent by the designated network element is received, where the first message carries the cause value determined by the designated network element and used for releasing or modifying the first data radio bearer or the designated network element, such that the reconfiguration management may be performed on the bearer type of the first data radio bearer or the bearer type of the data radio bearer on the designated network element based on this cause value, it is applicable to the evolution and extension of the data radio bearer, the flexible management of a radio resource of the designated network element or a sender of the first message is achieved, and therefore, a problem that, in the related art, the management of the radio resource on the network element is not flexible is solved, and the effect of improving the utilization rate of the resource of the designated network element or the sender of the first message is achieved.

It should be noted that the above-described designated network element may be the above-described second network element.

It should be noted that the data radio bearer on the above-described designated network element may refer to part data radio bearer or all data radio bearers on the above-described designated network element, and is not limited thereto. It should be noted that the part data radio bearer may be one or more data radio bearers.

It should be noted that the above-described cause value may include at least one of: a first cause value, which is used for indicating that a wireless channel quality between the designated network element and a terminal is lower than a first predetermined threshold; a second cause value, which is used for indicating that a load of a packet data convergence protocol (PDCP), entity and/or a service data adaptation protocol (SDAP), entity of the designated network element is greater than a second predetermined threshold; or a third cause value, which is used for indicating that a radio resource load of the designated network element is greater than a third predetermined threshold.

It should be noted that if the wireless channel quality between the designated network element and the terminal is lower than the first predetermined threshold, it may be considered as a poor wireless channel quality (poor air interface quality); if the load of the PDCP entity and/or the SDAP entity of the designated network element is greater than the second predetermined threshold, it may be considered as a PDCP overload or an SDAP overload; if the radio resource load of the designated network element is greater than the third predetermined threshold, it may be considered as a UE lost. That is, the first cause value described above may be the poor air interface quality, the second cause value described above may be the PDCP overload or SDAP overload, and the third cause value described above may be the UE lost.

It should be noted that, in a case where the above-described cause value includes the first cause value, the bearer type of the first data radio bearer or the bearer type of the data radio bearer on the designated network element is one of: a secondary cell group (SCG) bearer, a SCG split bearer, a main cell group (MCG) split bearer, or a MCG inter-NB bearer; in a case where the cause value includes the second cause value, the bearer type of the first data radio bearer or the bearer type of the data radio bearer on the designated network element is one of: the SCG bearer, the SCG split bearer or a SCG inter-NB bearer; and in a case where the cause value includes the third cause value, the bearer type of the first data radio bearer or the bearer type of the data radio bearer on the designated network element is one of: the SCG bearer or the MCG inter-NB bearer.

In an embodiment of the present disclosure, the above-described determination module 64 is further configured to be at least one of: in a case where the designated network element needs to be retained and the cause value includes the first cause value, the bearer type of the first data radio bearer or the bearer type of the data radio bearer on the designated network element is reconfigured to be a SCG inter-NB bearer or a MCG bearer; in a case where the designated network element needs to be retained and the cause value includes the second cause value, the bearer type of the first data radio bearer or the bearer type of the data radio bearer on the designated network element is reconfigured to be one of following three bearer types: the MCG bearer, a MCG split bearer or a MCG inter-NB bearer; in a case where the designated network element needs to be retained and the cause value includes the third cause value, the bearer type of the first data radio bearer or the bearer type of the data radio bearer on the designated network element is reconfigured to be the MCG split bearer or a SCG split bearer; the bearer type of the first data radio bearer or the bearer type of the data radio bearer on the designated network element is released; the designated network element is released; and the designated network element is switched.

It should be noted that the reconfiguration of the above-described bearer types may be represented as the release or reconfiguration of entities in the designated network element; for example, the reconfiguration of the bearer type of the data radio bearer from the SCG bearer to the SCG inter-NB bearer may be represented as: release of the upper-layer entity of the data radio bearer in the designated network element, and reconfiguration of the upper-layer entity into the network element of a receiver of the first message. The reconfiguration of the bearer type of other data radio bearers is similar and will not be described herein again.

In the embodiment corresponding to Fig. 6, the above-described device further includes a second sending module. The second sending module is configured to: in a case where the bearer type of all data radio bearers established by the designated network element for a designated user equipment is a SCG inter-NB bearer, send, to the designated network element, a message for instructing the designated network element whether to establish or delete at least one object of following objects: a lower-layer entity, a serving cell, or a signaling radio bearer between the designated network element and the designated user equipment, where the lower-layer entity includes a radio link control (RLC) entity and a medium access control (MAC) entity.

It should be noted that a connection relationship between the above-described second sending module and the above-described receiving module 62, the determination module 64 as well as the first sending module 66 is not limited.

It should be noted that the above-described establishing may be represented as that the above-described objects are established again on a basis that the above-described objects are not established by the designated network element, or may be represented as that the above-described objects have been established on the designated network element and the above-described object needs to be added, but it is not limited thereto.

It should be noted that whether the object is established or not may be directly indicated through the above-described indication information, and whether the object is established or not may also be indicated in an implicit manner, for example, whether the object is established or not may be determined by determining whether target cell information appears in the indication information or not. Specifically, in a case where the indication information includes the target cell information, it is determined to establish the object; in a case where the indication information does not include the target cell information, it is determined to not establish the object.

It should be noted that the above-described designated network element may further determine whether to establish or delete the object in at least one of following manners: whether to establish or delete an object is determined in accordance with a provision of a communication protocol; and whether to establish or delete an object is determined only by the second network element.

It should be noted that the above-described policy sending device may be located in the first network element shown in FIG. 1, but is not limited thereto.

It should be noted that the above modules may be implemented by software or hardware. For the latter, the above modules may be implemented in manners described below, but is not limited thereto: the above modules are located in a same processor; or the above modules are respectively positioned in different processors in any combination manner

### Embodiment 3

An embodiment of the present disclosure further provides a storage medium including a stored program, where the above-described program is executed to perform the method described in any one of the foregoing.

Optionally, in this embodiment, the above-described storage medium may include, but is not limited to, various media capable of storing program codes, such as a USB flash disk, a read-only memory (ROM), a random access memory (RAM), a mobile hard disk, a magnetic disk or optical disk.

An embodiment of the present disclosure further provides a processor, the processor is configured to run a program, and the program is executed to perform the steps in the method described in any one of the foregoing.

Optionally, specific examples in this embodiment may be referred to the examples described in the above-described embodiments and optional implementations, and details are not described in this embodiment.

In order to better understand the embodiments of the present disclosure, the present disclosure will be further explained with reference to preferred embodiments below.

Based on the architecture shown in FIG. 1 and the bearer types and modes of the UP and CP, this preferred embodiment provides a method, the method includes contents described below.

When it is decided to add at least one DRB to the second network element and the DRB needs to be configured as a SCG inter-NB bearer, the first network element sends an addition request message to the second network element, and the addition request message functions to request the second network element to agree to establish an upper-layer entity of the SCG inter-NB bearer. According to the addition request message, the second network element may acquire a resource that needs to be provided to establish the upper-layer entity of the SCG inter-NB bearer. If the second network element agrees to establish, then the second network element makes a radio resource configuration for the upper-layer entity of the SCG inter-NB bearer and replies to the first network element through an addition response message.

Further, if all DRBs established by the second network element for the designated UE are of the type of SCG inter-NB bearer, then the second network element needs to determine whether a lower-layer entity can be established (or rather, whether at least one serving cell can be established; or rather, whether a SRB3 can be established. This patent regards the three establishment objects described in this scenario as the same kind, and said establishment object described below is representative of the lower-layer entity, and is not specifically enumerated here). "Whether to establish the lower-layer entity" may be decided by the first network element, and may indicate a result of the decision to the second network element through an interface message (e.g., the addition request message, or other X2/Xn interface messages, which is not limited in this patent, but only states the function of the message); or whether to establish is explicitly specified in a communication protocol; or whether to establish is decided by the second network element. When the decision is made only by the second network element, the second network element needs to use the result of the decision as part of the radio resource configuration of the second network element and replies to the first network element through an interface message (such as the addition response message).

The first network element generates RRC signaling from the received radio resource configuration information of the second network element and sends the RRC signaling to the UE.

It should be noted that the message described in this preferred embodiment is merely intended to explain the role achieved by the message, and is not limited by the message name. For example, the signaling flow described above may occur in an existing second network element adding procedure, or may occur in a second network element modifying procedure.

When the second network element triggers the release or modification of the at least one DRB, optionally, the second network element indicates, to the first network element, a cause value for the release or modification (equivalent to the above-described cause value) (cause, or referred to as special value , or otherwise), the cause value includes, but is not limited to: a first cause value (equivalent to the first cause value in the above embodiments), a second cause value (equivalent to the second cause value in the above embodiments) and a third cause value (equivalent to the third cause value in the above embodiments).

The first cause value functions to indicate that a wireless channel quality between the second network element and the UE is no longer capable of undertaking an effective transmission of a data packet (for example, to indicate that the wireless channel quality is degraded or is below a certain threshold). The first cause value is suitable for a DRB type in which the lower-layer entity is established in the second network element, i.e., this DRB type at least includes one of SCG bearer/SCG split bearer/MCG split bearer/MCG inter-NB bearer.

The second cause value functions to indicate that a PDCP processing load and/or a SDAP processing load of the second network element is overload (for example, to indicate that the upper-layer entity processes a high load ). The second cause value is suitable for a DRB type in which the upper-layer entity is established in the second network element, i.e., this DRB type at least includes one of SCG bearer/SCG split bearer/SCG inter-NB bearer.

The third cause value functions to indicate that the radio resource of the second network element is overloaded and that it is difficult to maintain the throughput required by the DRB (for example, to indicate that the radio resource is overloaded or does not meet requiremnts on the quality of service). The third cause value is suitable for a DRB type in which the lower-layer entity is established only in the second network element, i.e., this DRB type at least includes at least one of SCG bearer/MCG inter-NB bearer.

The cause value may be a UE-level granularity or a DRB-level granularity.

The second network element transmits the release/modification of the DRB and its cause value to the first network element through an interface message (such as a second network element modification request message) (equivalent to the first message in the above embodiments); the first network element accepts the release/modification of the DRB, and performs reconfiguration management of the DRB according to the cause value. Corresponding to the above-described cause value, on the premise of retaining the second network element, the DRB reconfiguration management decision (equivalent to the policy in the above embodiments) of the first network element may include decisions described below.

For the first cause value, the first network element may decide to reconfigure the DRB to be one of SCG inter-NB/the MCG bearer.

For the second cause value, the first network element may decide to reconfigure the DRB to be one of MCG bearer/MCG split bearer/MCG inter-NB bearer.

For the third cause value, the first network element may decide to reconfigure the DRB to be one of MCG split bearer/SCG split bearer.

Optionally, the decision of the first network element may further include a release of the DRB. In addition, the first network element may also decide to release the second network element or switch the second network element. The type of reconfiguration of the DRB is not limited under these two decisions. The first network element replies a decided result to the second network element through an interface message.

The signaling flow described above may occur in an existing second network element modification procedure, or may occur in a second network element release procedure or other procedures.

Through the above-described method, a serving network element may implement hierarchical and highly flexible radio resource management of the radio bearer, such that the evolution and extension of the radio data bearer is adapted, the full use of the resource of the second network element is achieved, the service performance of an access network is improved, and the communication experience of a user is improved.

### Preferred Embodiment 1

The first network element decides to add the at least one DRB to the second network element in a manner of the bearer type of the SCG inter-NB bearer, and indicates that the second network element does not need to establish any lower-layer entity. FIG. 7 is a flowchart of a method according to a preferred embodiment 1 of the present disclosure. As shown in FIG. 7, the method includes steps described below.

In step 1, the first network element makes a radio resource management decision according to information such as a current wireless channel quality and resource usage condition; the decision is that an access network node is selected as the second network element to be added to the designated UE, and the second network element only needs to establish an upper-layer entity for one radio bearer, i.e., to provide PDCP (optionally, further including SDAP) encapsulation processing for the radio bearer. For example, a scenario on which the radio resource management decision is based is that the wireless channel quality between the second network element and the UE has not yet met a certain threshold, or that the wireless channel quality between the first network element and the UE sufficiently meets requirements on the quality of service of the radio bearer. However, at the same time, the PDCP processing load of the first network element is heavy, and the second network element is required to share part of the load. The radio bearer may be a DRB which has been established between the first network element and the UE, or may be a DRB which is instructed by the core network to be newly established by the first network element.

In the scenario described in this preferred embodiment, the DRB is all user plane transmissions that the second network element needs to undertake for the UE (i.e., only the upper-layer entity is established), then an radio resource management operation that the first network element also needs to perform is to decide whether the second network element may establish a lower-layer entity and to indicate a decision result to the second network element. The second network element is not allowed to establish the lower-layer entity, which means that the second network element does not have to establish any serving cell for the UE, nor may it establishes the SRB3. In addition, the "whether to establish the lower-layer entity" may also be explicitly specified in the communication protocol, or it may be decided by the second network element.

The first network element sends the radio resource management decision to the second network element through an interface message, such as a "second network element (SN) addition request" message, which functions to request the second network element to accept the establishment of an upper-layer entity of the DRB and make a corresponding radio resource configuration, without the need to establish any lower-layer entity. The information carried by the interface message is similar to the existing message, and the focus is to enable the second network element to explicitly only need to establish an upper-layer entity that meets requirement on the quality of service of the DRB, which may be achieved by indicating the bearer type (such as the SCG inter-NB bearer) or other information with the same role (such as not carrying any information related to the target cell). In addition, the first network element needs to provide a transport layer address and a tunnel port address allocated for receiving a downlink PDCP data packet of the DRB.

In step 2, based on the received second network element addition request message, the second network element may obtain a resource required to be provided for establishing the upper-layer entity of the DRB, and may determine whether to agree to accept or not according to the resource. If it is determined to agree to accept, the second network element makes a radio resource configuration for the upper-layer entity of the DRB, carries the radio resource configuration in an interface message, such as a "second network element addition request confirmation" message and replies the interface message to the first network element. Other information carried in the second network element addition request confirmation message is the same as the existing message, such as the transport layer address and the tunnel port address which are allocated for receiving uplink/downlink data packets. In addition, if the "whether to establish the lower-layer entity" described in the step 1 is decided by the second network element, the second network element needs to carry a result of decision (and, if it is decided to establish, the radio resource configuration made due to the establishment) in the message and reply the message to the first network element.

It should be noted that this preferred embodiment is exemplified by the adding procedure of the second network element without establishing the lower-layer entity, and in a process of providing service for the UE, an access network may decide to re-establish the lower-layer entity, for example, the first network element notifies the second network element of an indication for establishing the lower-layer entity through the second network element modification procedure.

In step 3, a user equipment (UE) and the first network element execute an RRC connection reconfiguration procedure.

In step 4, the reconfiguration of the second network element is completed.

In step 5, a random access is performed.

In step 6, a state transmission and data forwarding flow between the first network element and the second network element is performed.

In step 7, a path conversion flow between the first network element and the core network is performed.

It should be noted that the signaling flows of steps 3 to 7 are similar to those of the existing art; for example, if the radio bearer is a DRB that has been established between the first network element and the UE, then the path conversion flow between the first network element and the core network (the step 7), and optionally the state transmission and data forwarding flow between the first network element and the second network element (the step 6) are required. It should be noted that if the second network element does not establish any lower-layer entity, the random access procedure of the step 5 need not be performed, and the UE does not have to monitor a carrier of the second network element. After the established upper-layer entity performs encapsulation processing on the received downlink data packet, the second network element transmits the processed data packet to the first network element, so that the first network element may send the data packet to the UE through the radio interface.

### Preferred embodiment 2

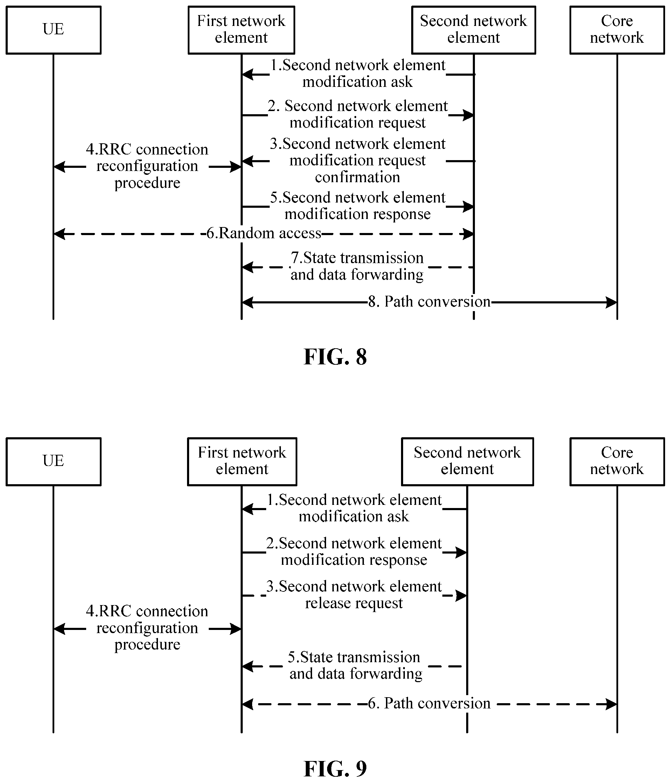

Because of large processing load of PDCP, the second network element decides to release the upper-layer entity of the at least one DRB; the second network element sends a released request to the first network element. The first network element decides to retain the second network element and performs a radio resource reconfiguration decision of the DRB that is requested to be released. FIG. 8 is a flowchart of a method according to a preferred embodiment 2 of the present disclosure. As shown in FIG. 8, the method includes steps described below

In step 1, for the second network element which has undertaken at least one DRB transmission in the SCG bearer/SCG Split bearer/SCG inter-NB bearer, when the PDCP processing load of the second network element is large, the second network element may decide to release an upper-layer entity of the at least one DRB. The second network element notifies the first network element of the identifier and the cause of the DRB to be released through an interface message, such as a "second network element modification ask" message. The cause functions to indicate to the first network element that the second network element is no longer capable of undertaking an upper-layer entity encapsulation processing of part or all of the DRBs, the cause may be a UE level (i.e., the cause shares all DRBs transmitted at the second network element for the UE, in this manner, the DRB identification may be omitted) or may be a DRB level (i.e., the cause shares only part of the DRBs transmitted at the second network element for the UE).

In step 2, after the message described in the step 1 is received, the first network element firstly decides to retain the second network element. Further, the first network element decides a reconfiguration bearer type of the DRB requested to be released. The reconfiguration bearer type includes at least an agreement to release an upper-layer entity (i.e., reconfiguring the upper-layer entity of the DRB to the first network element) of the DRB located in the second network element, and specifically, for an original SCG bearer or SCG Split bearer, the reconfiguration type may be a MCG bearer or a MCG Split bearer or a MCG inter-NB bearer; for an original SCG inter-NB bearer, the reconfiguration type may be a MCG bearer. On the other hand, for the scheme described in this preferred embodiment, the retaining of the second network element means that the second network element also establishes at least one lower-layer entity of the DRB (i.e., the first network element will not configure all DRBs of the UE as the MCG bearer).

When the reconfiguration type of at least one DRB is the MCG Split bearer or the MCG inter-NB bearer, the first network element needs to notify the second network element of a result of the reconfiguration decision through an interface message, such as a "second network element modification request" message, the message functions to enable the second network element to perform necessary reconfiguration of the lower-layer entity according to the change of a network element position where the upper-layer entity of the DRB is positioned; the information carried by the message is similar to the existing message.

In steps 3 to 8, subsequent signaling flow and function of this procedure are similar to those of the existing art, and are not repeated here.

### Preferred embodiment 3

Since the wireless channel quality between the second network element and the UE is lower than the threshold, the second network element decides to release at least the lower-layer entity of each DRB; and the second network element sends a released request to the first network element. The first network element decides to release the second network element. FIG. 9 is a flowchart of a method according to a preferred embodiment 3 of the present disclosure. As shown in FIG. 9, the method includes steps described below.

In step 1, for the second network element which has undertaken at least one DRB transmission in the SCG bearer/SCG Split bearer/MCG Split bearer/MCG inter-NB bearer, when the wireless channel quality between the second network element and the UE is lower than a certain threshold or the wireless channel quality acquired by the second network element is not good, the second network element may decide to release at least the lower-layer entity of each DRB that it is responsible for transmitting for the UE. The second network element notifies the first network element of the identifier (and/or the identifier of the UE) and the cause of the DRB to be released through an interface message, such as a "second network element modification ask" message. The cause functions to indicate to the first network element that the second network element is no longer capable of undertaking part or all of the lower-layer entities of the DRB; the cause may be the UE level or the DRB level (i.e., indicated in the relevant information element of each DRB requested to be released).

In step 2, after the message described in the step 1 is received, the first network element decides to release the second network element, i.e., not only agrees to release the lower-layer entity by the second network element, but also decides to release all contexts related to the UE on the second network element (i.e., if the second network element is configured with the upper-layer entity of the DRB, the upper-layer entity is also released). The first network element confirms at least the release requested by the second network element in step 1 (i.e., the release of the downlink entity) through an interface message, such as a "second network element modify response" message.

It should be noted that, the preferred embodiment 2 is exemplified by the first network element deciding to release the second network element, but similarly to preferred embodiment 1, the first network element may also decide to retain the second network element. If the first network element decides to remain the second network element, then the reconfiguration type of the DRB requested to be released by the second network element may be a MCG bearer/a SCG inter-NB bearer; whereas in the example illustrated in this preferred embodiment that the first network element decides to release the second network element, the DRB may only be reconfigured as the MCG bearer unless the first network element decides to thoroughly release the DRB (i.e. indicate the release to the core network).

In step 3, optional (the step 3 may be omitted if the message of the step 2 has completed the release of a UE context), the first network element triggers a second network element release procedure to release the UE context on the second network element.

In steps 4 to 6, in the RRC signaling sent to the UE, the first network element instructs the UE to release the radio resource configuration of the second network element and reconfigure the DRB to be an MCG bearer. Subsequent signaling flows of this procedure are similar to the existing art, and are not repeated here.

### Preferred embodiment 4

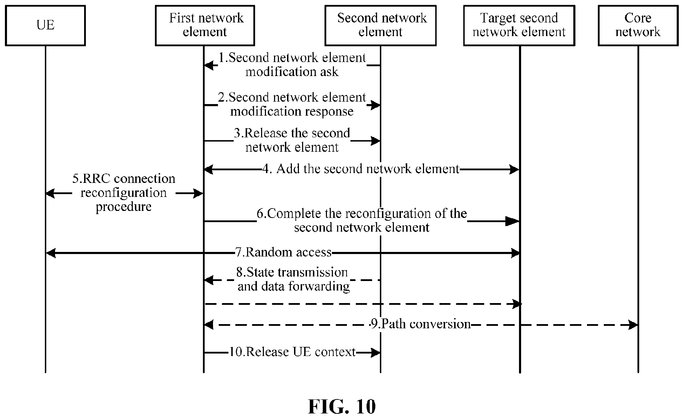

When the radio resource load of the second network element is heavy, the second network element notifies the first network element of this information to assist the first network element in performing an effective radio resource management. According to the received message, the first network element may decide to switch the second network element. FIG. 10 is a flowchart of a method according to a preferred embodiment 4 of the present disclosure. As shown in FIG. 10, the method includes steps described below.

In step 1, for the second network element that has already undertaken the SCG/MCG inter-NB bearer transmission, when the radio resource of the second network element are relatively tense, i.e., the radio resource load is relatively heavy, the second network element notifies the first network element of the information through an interface message, such as a second network element modification ask message. Further, the message may also carry a UE identifier and a DRB identifier suggested by the second network element, so that the first network element may preferentially reconfigure the proposed DRB, such as bearer type conversion or release (if the first network element still want to retain the second network element).

In step 2, after the message described in the step 1 is received, the first network element decides to switch the second network element, i.e., the first network element decides to no longer retain the second network element, but to transfer the DRB originally shared to the second network element for transmission to a target second network element for continuous transmission. The first network element indicates the decision result to the second network element through an interface message, such as a second network element modification response message, i.e., the release of the second network element.

It should be noted that the preferred embodiment 3 is exemplified by the first network element deciding to switch the second network element, but similarly to the preferred embodiment 1, the first network element may also decide to retain the second network element. As long as the first network element does not decide to thoroughly release the DRB, the first network element needs to decide to reconfigure the DRB. Under the decision of switching the second network element, the reconfiguration bearer type of the DRB may be randomly selected according to the wireless condition; and if the first network element decides to retain the second network element, at least the reconfiguration type of the DRB suggested by the second network element may be a MCG Split bearer or SCG Split bearer.

In steps 3 to 10, starting from the second network element release procedure in the step 3, subsequent signaling flows may be regarded as a signaling flow similar to the existing procedure "second network element change (SN change)", and are not repeated here.

Apparently, those skilled in the art will appreciate that the above-described modules or steps of the present disclosure may be implemented by a general-purpose computing device, and they may be centralized on a single computing device or distributed over a network composed of multiple computing devices, and optionally, they may be implemented with a program code executable by a computing device, so that the above-described modules or steps of the present disclosure may be stored in a storage device and executed by the computing device, and in some cases, the steps shown or described may be performed in an order different from that of herein, or they may be implemented either by making them into individual integrated circuit modules or by making multiple modules or steps thereof into a single integrated circuit module. As such, the present disclosure is not limited to any particular combination of hardware and software.

## Claims

1. A message sending method, comprising:
determining (S302) to release or modify a first data radio bearer or a designated network element; and
sending (S304) a first message to a first network element, wherein the first message carries a cause value for releasing or modifying the first data radio bearer or the designated network element, the cause value is used for the first network element to perform reconfiguration management of a bearer type of the first data radio bearer or a bearer type of a data radio bearer on the designated network element;
**characterized in that** the method further comprises:
in a case where the bearer type of all data radio bearers established by the designated network element for a designated user equipment is a secondary cell group, SCG, inter-NB bearer, which is a DRB bearer having a UP interface terminated on the second network element, and a lower-layer entity of the L2 protocol
stack only and completely located in the first network element,
determining whether to establish or delete at least one object of following objects: a lower-layer entity, a serving cell, or a signaling radio bearer between the designated network element and the designated user equipment, wherein the lower-layer entity comprises a radio link control, RLC, entity, and a medium access control, MAC, entity.

2. The method of claim 1, wherein the cause value comprises at least one of:
a first cause value, which is used for indicating that a wireless channel quality between the designated network element and a terminal is lower than a first predetermined threshold;
a second cause value, which is used for indicating that a load of a packet data convergence protocol, PDCP, entity and/or a service data adaptation protocol, SDAP, entity of the designated network element is greater than a second predetermined threshold; or
a third cause value, which is used for indicating that a load of radio resource of the designated network element is greater than a third predetermined threshold;
wherein the designated network element is a sender of the first message.

3. The method of claim 2, wherein,
in a case where the cause value comprises the first cause value, the bearer type of the first data radio bearer or the bearer type of the data radio bearer on the designated network element is one of: a SCG bearer, a SCG split bearer, a main cell group, MCG, split bearer or a MCG inter-NB bearer;
in a case where the cause value comprises the second cause value, the bearer type of the first data radio bearer or the bearer type of the data radio bearer on the designated network element is one of: the SCG bearer, the SCG split bearer or a SCG inter-NB bearer; and
in a case where the cause value comprises the third cause value, the bearer type of the first data radio bearer or the bearer type of the data radio bearer on the designated network element is one of: the SCG bearer or the MCG inter-NB bearer.

4. The method of claim 2, wherein after sending (S304) the first message to the first network element, the method further comprises:
receiving a second message sent by the first network element, wherein the second message carries a policy for the first network element to perform the reconfiguration management of the bearer type of the first data radio bearer or the bearer type of the data radio bearer on the designated network element.

5. The method of claim 4, wherein the policy comprises at least one of:
in a case where the designated network element needs to be retained and the cause value comprises the first cause value, reconfiguring the bearer type of the first data radio bearer or the bearer type of the data radio bearer on the designated network element to be a SCG inter-NB bearer or a MCG bearer;
in a case where the designated network element needs to be retained and the cause value comprises the second cause value, reconfiguring the bearer type of the first data radio bearer or the bearer type of the data radio bearer on the designated network element to be one of following three bearer types: the MCG bearer, a MCG split bearer or a MCG inter-NB bearer;
in a case where the designated network element needs to be retained and the cause value comprises the third cause value, reconfiguring the bearer type of the first data radio bearer or the bearer type of the data radio bearer on the designated network element to be the MCG split bearer or a SCG split bearer;
releasing the bearer type of the first data radio bearer or the bearer type of the data radio bearer on the designated network element;
releasing the designated network element; and
switching the designated network element.

6. A policy sending method, comprising:
receiving (S402) a first message sent by a designated network element, wherein the first message carries a cause value determined by the designated network element and used for releasing or modifying a first data radio bearer or the designated network element;
determining (S404), according to the cause value, a policy of reconfiguration management of a bearer type of the first data radio bearer or a bearer type of a data radio bearer on the designated network element; and
sending (S406) the determined policy to the designated network element;
**characterized in that** the method further comprises:
in a case where the bearer type of all data radio bearers established by the designated network element for a designated user equipment is a secondary cell group, SCG, inter-NB bearer, which is a DRB bearer having a UP interface terminated on the second network element, and a lower-layer entity of the L2 protocol stack only and completely located in the first network element,
sending, to the designated network element, a message for instructing the designated network element whether to establish or delete at least one object of following objects: a lower-layer entity, a serving cell, or a signaling radio bearer between the designated network element and the designated user equipment, wherein the lower-layer entity comprises a radio link control, RLC, entity, and a medium access control, MAC, entity.

7. The method of claim 6, wherein the cause value comprises at least one of:
a first cause value, which is used for indicating that a wireless channel quality between the designated network element and a terminal is lower than a first predetermined threshold;
a second cause value, which is used for indicating that a load of a packet data convergence protocol, PDCP, entity and/or a service data adaptation protocol, SDAP, entity of the designated network element is greater than a second predetermined threshold; or
a third cause value, which is used for indicating that a load of radio resource of the designated network element is greater than a third predetermined threshold.

8. The method of claim 7, wherein,
in a case where the cause value comprises the first cause value, the bearer type of the first data radio bearer or the bearer type of the data radio bearer on the designated network element is one of: a SCG bearer, a SCG split bearer, a main cell group, MCG, split bearer, or a MCG inter-NB bearer;
in a case where the cause value comprises the second cause value, the bearer type of the first data radio bearer or the bearer type of the data radio bearer on the designated network element is one of: the SCG bearer, the SCG split bearer or a SCG inter-NB bearer; and
in a case where the cause value comprises the third cause value, the bearer type of the first data radio bearer or the bearer type of the data radio bearer on the designated network element is one of: the SCG bearer or the MCG inter-NB bearer.

9. The method of claim 7, wherein determining (S404) the policy of the reconfiguration management of the bearer type of the first data radio bearer or the bearer type of the data radio bearer on the designated network element comprises at least one of:
in a case where the designated network element needs to be retained and the cause value comprises the first cause value, reconfiguring the bearer type of the first data radio bearer or the bearer type of the data radio bearer on the designated network element to be a SCG inter-NB bearer or a MCG bearer;
in a case where the designated network element needs to be retained and the cause value comprises the second cause value, reconfiguring the bearer type of the first data radio bearer or the bearer type of the data radio bearer on the designated network element to be one of following three bearer types: the MCG bearer, a MCG split bearer or a MCG inter-NB bearer;
in a case where the designated network element needs to be retained and the cause value comprises the third cause value, reconfiguring the bearer type of the first data radio bearer or the bearer type of the data radio bearer on the designated network element to be the MCG split bearer or a SCG split bearer;
releasing the bearer type of the first data radio bearer or the bearer type of the data radio bearer on the designated network element;
releasing the designated network element; and
switching the designated network element.

10. A message sending device, comprising:
a first determination module (52), which is configured to determine to release or modify a first data radio bearer or a designated network element; and
a sending module (54), which is configured to send a first message to a first network element, wherein the first message carries a cause value for releasing or modifying the first data radio bearer or the designated network element; the cause value is used for the first network element to perform reconfiguration management of a bearer type of the first data radio bearer or a bearer type of a data radio bearer on the designated network element;
**characterized in that** the message sending device further comprises:
a second determination module, wherein in a case where the bearer type of all data radio bearers established by the designated network element for a designated user equipment is a secondary cell group, SCG, inter-NB bearer, which is a DRB bearer having a UP interface terminated on the second network element, and a lower-layer entity of the L2 protocol stack only and completely located in the first network element,
the second determination module is configured
to determine whether to establish or delete at least one object of following objects: a lower-layer entity, a serving cell, or a signaling radio bearer between the designated network element and the designated user equipment, wherein the lower-layer entity comprises a radio link control, RLC, entity and a medium access control, MAC, entity.

11. A policy sending device, comprising:
a receiving module (62), which is configured to receive a first message sent by a designated network element, wherein the first message carries a cause value determined by the designated network element and used for releasing or modifying a first data radio bearer or the designated network element;
a determination module (64), which is configured to determine, according to the cause value, a policy of reconfiguration management of a bearer type of the first data radio bearer or a bearer type of a data radio bearer on the designated network element; and
a first sending module (66), which is configured to send the determined policy to the designated network element;
**characterized in that** the policy sending device further comprises:
a second sending module, wherein in a case where the bearer type of all data radio bearers established by the designated network element for a designated user equipment is a secondary cell group, SCG, inter-NB bearer, which is a DRB bearer having a UP interface terminated on the second network element, and a lower-layer entity of the L2 protocol stack only and completely located in the first network element,
the second sending module is configured to send,
to the designated network element, a message for instructing the designated network element whether to establish or delete at least one object of following objects: a lower-layer entity, a serving cell, or a signaling radio bearer between the designated network element and the designated user equipment, wherein the lower-layer entity comprises a radio link control, RLC, entity and a medium access control, MAC, entity.

12. A storage medium, comprising a stored program, wherein the program is executed to perform the method of any one of claims 1 to 5.

13. A processor, the processor is configured to run a program, wherein the program is executed to perform the method of any one of claims 1 to 5.

14. A storage medium, comprising a stored program, wherein the program is executed to perform the method of any one of claims 6 to 9.

15. A processor, the processor is configured to run a program, wherein the program is executed to perform the method of any one of claims 6 to 9.

## Patentansprüche

1. Verfahren zum Senden von Nachrichten, welches umfasst:
ein Bestimmen (S302), um einen ersten Datenfunkträger oder ein bestimmtes Netzelement freizugeben oder zu modifizieren; und
ein Senden (S304) einer ersten Nachricht an ein erstes Netzelement, wobei die erste Nachricht einen Ursachenwert zum Freigeben oder zum Modifizieren des ersten Datenfunkträgers oder des bestimmten Netzelements trägt, wobei der Ursachenwert für das erste Netzelement verwendet wird, um eine Verwaltung einer Rekonfiguration einer Trägerart des ersten Datenfunkträgers oder einer Trägerart eines Datenfunkträgers auf dem bestimmten Netzelement durchzuführen; **dadurch gekennzeichnet, dass** das Verfahren ferner umfasst:
in einem Fall, in dem die Trägerart aller Datenfunkträger, die von dem bestimmten Netzelement für ein bestimmtes Benutzergerät eingerichtet werden, ein Inter-NB-Träger einer Sekundärzellengruppe, SCG, ist, der ein DRB-Träger mit einer UP-Schnittstelle ist, die auf dem zweiten Netzelement endet, und eine Entität einer unteren Schicht des L2-Protokollstapels nur und vollständig in dem ersten Netzelement angeordnet ist, ein Bestimmen, ob mindestens ein Element der folgenden Elemente eingerichtet oder gelöscht werden soll: eine Entität der unteren Schicht, eine bedienende Zelle oder ein Signalisierungsfunkträger zwischen dem bestimmten Netzelement und dem bestimmten Benutzergerät, wobei die Entität der unteren Schicht eine Entität der Funkverbindungssteuerung, RLC, und eine Entität der Medienzugriffssteuerung, MAC, aufweist.

2. Verfahren nach Anspruch 1, wobei der Ursachenwert mindestens eines der folgenden Elemente aufweist:
einen ersten Ursachenwert, der verwendet wird, um anzuzeigen, dass eine drahtlose Kanalqualität zwischen dem bestimmten Netzelement und einem Endgerät niedriger als ein erster vorbestimmter Schwellenwert ist;
einen zweiten Ursachenwert, der verwendet wird, um anzuzeigen, dass eine Auslastung einer Entität eines Paketdatenkonvergenzprotokolls, PDCP, und/oder einer Entität eines Dienstdatenadaptionsprotokolls, SDAP, des bestimmten Netzelements größer als ein zweiter vorbestimmter Schwellenwert ist; oder
einen dritten Ursachenwert, der verwendet wird, um anzuzeigen, dass eine Auslastung der Funkressource des bestimmten Netzelements größer als ein dritter vorbestimmter Schwellenwert ist;
wobei das bestimmte Netzelement ein Absender der ersten Nachricht ist.

3. Verfahren nach Anspruch 2, wobei
in einem Fall, in dem der Ursachenwert den ersten Ursachenwert aufweist, die Trägerart des ersten Datenfunkträgers oder die Trägerart des Datenfunkträgers auf dem bestimmten Netzelement einer ist von: einem SCG-Träger, einem SCG-Split-Träger, einem Hauptzellengruppen-Split-Träger, MCG-Split-Träger, oder einem MCG-Inter-NB-Träger;
in einem Fall, in dem der Ursachenwert den zweiten Ursachenwert aufweist, die Trägerart des ersten Datenfunkträgers oder die Trägerart des Datenfunkträgers auf dem bestimmten Netzelement einer ist von: dem SCG-Träger, dem SCG-Split-Träger oder einem SCG-Inter-NB-Träger; und
in einem Fall, in dem der Ursachenwert den dritten Ursachenwert aufweist, die Trägerart des ersten Datenfunkträgers oder die Trägerart des Datenfunkträgers auf dem bestimmten Netzelement einer ist von: dem SCG-Träger oder dem MCG-InterNB-Träger.

4. Verfahren nach Anspruch 2, wobei nach dem Senden (S304) der ersten Nachricht an das erste Netzelement das Verfahren ferner umfasst:
ein Empfangen einer zweiten Nachricht, die von dem ersten Netzelement gesendet worden ist, wobei die zweite Nachricht eine Richtlinie für das erste Netzelement trägt, um die Verwaltung der Rekonfiguration der Trägerart des ersten Datenfunkträgers oder der Trägerart des Datenfunkträgers auf dem bestimmten Netzelement durchzuführen.

5. Verfahren nach Anspruch 4, wobei die Richtlinie mindestens eines umfasst von:
in einem Fall, in dem das bestimmte Netzelement beibehalten werden muss und der Ursachenwert den ersten Ursachenwert aufweist, ein Rekonfigurieren der Trägerart des ersten Datenfunkträgers oder der Trägerart des Datenfunkträgers auf dem bestimmten Netzelement, um ein SCG-Inter-NB-Träger oder ein MCG-Träger zu sein;
in einem Fall, in dem das bestimmte Netzelement beibehalten werden muss und der Ursachenwert den zweiten Ursachenwert aufweist, ein Rekonfigurieren der Trägerart des ersten Datenfunkträgers oder der Trägerart des Datenfunkträgers auf dem bestimmten Netzelement, um einer der folgenden drei Arten an Trägern zu sein: der MCG-Träger, der MCG-Split-Träger oder der MCG-Inter-NB-Träger;
in einem Fall, in dem das bestimmte Netzelement beibehalten werden muss und der Ursachenwert den dritten Ursachenwert aufweist, ein Rekonfigurieren der Trägerart des ersten Datenfunkträgers oder der Trägerart des Datenfunkträgers auf dem bestimmten Netzelement, um der MCG-Split-Träger oder ein SCG-Split-Träger zu sein;
ein Freigeben der Trägerart des ersten Datenfunkträgers oder der Trägerart des Datenfunkträgers auf dem bestimmten Netzelement;
ein Freigeben des bestimmten Netzelements; und
ein Schalten des bestimmten Netzelements.

6. Verfahren zum Senden von Richtlinien, welches umfasst:
ein Empfangen (S402) einer ersten Nachricht, die von einem bestimmten Netzelement gesendet worden ist, wobei die erste Nachricht einen Ursachenwert trägt, der von dem bestimmten Netzelement bestimmt worden ist und der zum Freigeben oder zum Ändern eines ersten Datenfunkträgers oder des bestimmten Netzelements verwendet wird;
ein Bestimmen (S404) in Übereinstimmung mit dem Ursachenwert von einer Richtlinie einer Verwaltung einer Rekonfiguration einer Trägerart des ersten Datenfunkträgers oder einer Trägerart eines Datenfunkträgers auf dem bestimmten Netzelement; und
ein Senden (S406) der bestimmten Richtlinie an das bestimmte Netzelement; **dadurch gekennzeichnet, dass** das Verfahren ferner umfasst:
in einem Fall, in dem die Trägerart aller Datenfunkträger, die von dem bestimmten Netzelement für ein bestimmtes Benutzergerät eingerichtet werden, ein Inter-NB-Träger einer Sekundärzellengruppe, SCG, ist, der ein DRB-Träger mit einer UP-Schnittstelle ist, die auf dem zweiten Netzelement endet, und eine Entität der unteren Schicht des L2-Protokollstapels nur und vollständig in dem ersten Netzelement angeordnet ist, ein Senden einer Nachricht an das bestimmte Netzelement, um das bestimmte Netzelement anzuweisen, ob mindestens ein Element der folgenden Elemente eingerichtet oder gelöscht werden soll von: einer Entität der unteren Schicht, einer bedienenden Zelle oder einem Signalisierungsfunkträger zwischen dem bestimmten Netzelement und dem bestimmten Benutzergerät, wobei die Entität der unteren Schicht eine Entität der Funkverbindungssteuerung, RLC, und eine Entität der Medienzugriffssteuerung, MAC, aufweist.

7. Verfahren nach Anspruch 6, wobei der Ursachenwert mindestens einen aufweist von:
einem ersten Ursachenwert, der verwendet wird, um anzuzeigen, dass eine drahtlose Kanalqualität zwischen dem bestimmten Netzelement und einem Endgerät niedriger als ein erster vorbestimmter Schwellenwert ist;
einem zweiten Ursachenwert, der verwendet wird, um anzuzeigen, dass eine Auslastung einer Entität eines Paketdatenkonvergenzprotokolls, PDCP, und/oder einer Entität eines Dienstdatenadaptionsprotokolls, SDAP, des bestimmten Netzelements größer als ein zweiter vorbestimmter Schwellenwert ist; oder
einem dritten Ursachenwert, der verwendet wird, um anzuzeigen, dass die Auslastung der Funkressource des bestimmten Netzelements größer als ein dritter vorbestimmter Schwellenwert ist.

8. Verfahren nach Anspruch 7, wobei
in einem Fall, in dem der Ursachenwert den ersten Ursachenwert aufweist, die Trägerart des ersten Datenfunkträgers oder die Trägerart des Datenfunkträgers auf dem bestimmten Netzelement einer ist von: einem SCG-Träger, einem SCG-Split-Träger, einem Hauptzellengruppen-Split-Träger, MCG-Split-Träger, oder einem MCG-Inter-NB-Träger;
in einem Fall, in dem der Ursachenwert den zweiten Ursachenwert aufweist, die Trägerart des ersten Datenfunkträgers oder die Trägerart des Datenfunkträgers auf dem bestimmten Netzelement einer ist von: dem SCG-Träger, dem SCG-Split-Träger oder einem SCG-Inter-NB-Träger; und
in einem Fall, in dem der Ursachenwert den dritten Ursachenwert aufweist, die Trägerart des ersten Datenfunkträgers oder die Trägerart des Datenfunkträgers auf dem bestimmten Netzelement einer ist von: dem SCG-Träger oder dem MCG-InterNB-Träger.

9. Verfahren nach Anspruch 7, wobei das Bestimmen (S404) der Richtlinie der Verwaltung der Rekonfiguration der Trägerart des ersten Datenfunkträgers oder der Trägerart des Datenfunkträgers auf dem bestimmten Netzelement mindestens eines umfasst von:
in einem Fall, in dem das bestimmte Netzelement beibehalten werden muss und der Ursachenwert den ersten Ursachenwert aufweist, ein Rekonfigurieren der Trägerart des ersten Datenfunkträgers oder der Trägerart des Datenfunkträgers auf dem bestimmten Netzelement, um ein SCG-Inter-NB-Träger oder ein MCG-Träger zu sein;
in einem Fall, in dem das bestimmte Netzwerkelement beibehalten werden muss und der Ursachenwert den zweiten Ursachenwert aufweist, ein Rekonfigurieren der Trägerart des ersten Datenfunkträgers oder der Trägerart des Datenfunkträgers auf dem bestimmten Netzwerkelement, um einer der folgenden drei Arten an Trägern zu sein: der MCG-Träger, der MCG-Split-Träger oder der MCG-Inter-NB-Träger;
in einem Fall, in dem das bestimmte Netzelement beibehalten werden muss und der Ursachenwert den dritten Ursachenwert aufweist, ein Rekonfigurieren der Trägerart des ersten Datenfunkträgers oder der Trägerart des Datenfunkträgers auf dem bestimmten Netzelement, um der MCG-Split-Träger oder ein SCG-Split-Träger zu sein;
ein Freigeben der Trägerart des ersten Datenfunkträgers oder der Trägerart des Datenfunkträgers auf dem bestimmten Netzelement;
ein Freigeben des bestimmten Netzelements; und
ein Schalten des bestimmten Netzelements.

10. Vorrichtung zum Senden von Nachrichten, welche aufweist:
ein erstes Bestimmungsmodul (52), das ausgestaltet ist, um zu bestimmen, um einen ersten Datenfunkträger oder ein bestimmtes Netzelement freizugeben oder zu modifizieren; und
ein Sendemodul (54), das ausgestaltet ist, um eine erste Nachricht an ein erstes Netzelement zu senden, wobei die erste Nachricht einen Ursachenwert zum Freigeben oder zum Modifizieren des ersten Datenfunkträgers oder des bestimmten Netzelements trägt; wobei der Ursachenwert für das erste Netzelement verwendet wird, um eine Verwaltung einer Rekonfiguration einer Trägerart des ersten Datenfunkträgers oder einer Trägerart eines Datenfunkträgers auf dem bestimmten Netzelement durchzuführen; **dadurch gekennzeichnet, dass** die Vorrichtung zum Senden von Nachrichten ferner aufweist:
ein zweites Bestimmungsmodul, wobei in einem Fall, in dem die Trägerart aller Datenfunkträger, die von dem bestimmten Netzelement für ein bestimmtes Benutzergerät eingerichtet worden sind, ein Inter-NB-Träger einer Sekundärzellengruppe, SCG, ist, der ein DRB-Träger mit einer UP-Schnittstelle ist, die auf dem zweiten Netzelement endet, und eine Entität einer unteren Schicht des L2-Protokoll- stapels nur und vollständig in dem ersten Netzelement angeordnet ist, das zweite Bestimmungsmodul ausgestaltet ist, um zu bestimmen, ob mindestens ein Element der folgenden Elemente eingerichtet oder gelöscht werden soll: eine Entität der unteren Schicht, eine bedienende Zelle oder ein Signalisierungsfunkträger zwischen dem bestimmten Netzelement und dem bestimmten Benutzergerät, wobei die Entität der unteren Schicht eine Entität der Funkverbindungssteuerung, RLC, und eine Entität der Medienzugriffssteuerung, MAC, aufweist.

11. Vorrichtung zum Senden von Richtlinien, welche aufweist:
ein Empfangsmodul (62), das ausgestaltet ist, um eine erste Nachricht zu empfangen, die von einem bestimmten Netzelement gesendet worden ist, wobei die erste Nachricht einen Ursachenwert trägt, der von dem bestimmten Netzelement bestimmt worden ist und der zum Freigeben oder zum Modifizieren eines ersten Datenfunkträgers oder des bestimmten Netzelements verwendet wird;
ein Bestimmungsmodul (64), das ausgestaltet ist, um dem Ursachenwert entsprechend eine Richtlinie einer Verwaltung einer Rekonfiguration einer Trägerart des ersten Datenfunkträgers oder einer Trägerart eines Datenfunkträgers auf dem bestimmten Netzelement zu bestimmen; und
ein erstes Sendemodul (66), das ausgestaltet ist, um die bestimmte Richtlinie an das bestimmte Netzelement zu senden; **dadurch gekennzeichnet, dass** die Vorrichtung zum Senden von Richtlinien ferner aufweist:
ein zweites Sendemodul, wobei in einem Fall, in dem die Trägerart aller Datenfunkträger, die von dem bestimmten Netzelement für ein bestimmtes Benutzergerät eingerichtet worden sind, ein Inter-NB-Träger einer Sekundärzellengruppe, SCG, ist, der ein DRB-Träger mit einer UP-Schnittstelle ist, die auf dem zweiten Netzelement endet, und eine Entität der unteren Schicht des L2-Protokollstapels nur und vollständig in dem ersten Netzelement angeordnet ist, das zweite Sendemodul ausgestaltet ist, um an das bestimmte Netzelement eine Nachricht zu senden, um das bestimmte Netzelement anzuweisen, ob mindestens ein Element der folgenden Elemente eingerichtet oder gelöscht werden soll von: einer Entität der unteren Schicht, einer bedienenden Zelle oder einem Signalisierungsfunkträger zwischen dem bestimmten Netzelement und dem bestimmten Benutzergerät, wobei die Entität der unteren Schicht eine Entität der Funkverbindungssteuerung, RLC, und eine Entität der Medienzugangssteuerung, MAC, aufweist.

12. Speichermedium, das ein gespeichertes Programm enthält, wobei das Programm ausgeführt wird, um das Verfahren nach einem der Ansprüche 1 bis 5 durchzuführen.

13. Prozessor, wobei der Prozessor ausgestaltet ist, um ein Programm laufen zu lassen, wobei das Programm ausgeführt wird, um das Verfahren nach einem der Ansprüche 1 bis 5 durchzuführen.

14. Speichermedium, das ein gespeichertes Programm enthält, wobei das Programm ausgeführt wird, um das Verfahren nach einem der Ansprüche 6 bis 9 durchzuführen.

15. Prozessor, wobei der Prozessor ausgestaltet ist, um ein Programm laufen zu lassen, wobei das Programm ausgeführt wird, um das Verfahren nach einem der Ansprüche 6 bis 9 durchzuführen.

## Revendications

1. Procédé d'envoi de message, comprenant :
la détermination (S302) de libération ou de modification d'un premier support radio de données ou d'un élément de réseau désigné ; et
l'envoi (S304) d'un premier message à un premier élément de réseau, dans lequel le premier message transporte une valeur de cause pour la libération ou la modification du premier support radio de données ou de l'élément de réseau désigné, la valeur de cause étant utilisée pour que le premier élément de réseau effectue une gestion de reconfiguration d'un type de support du premier support radio de données ou d'un type de support d'un support radio de données sur l'élément de réseau désigné ;
**caractérisé en ce que** le procédé comprend en outre :
dans un cas où le type de support de tous les supports radio de données établis par l'élément de réseau désigné pour un équipement utilisateur désigné est un support inter-NB de groupe de cellules secondaire, SCG, qui est un support radio de données DRB ayant une interface UP qui se termine sur le deuxième élément de réseau, et une entité de couche inférieure de la pile de protocoles L2 uniquement et complètement située dans le premier élément de réseau,
la détermination d'établir ou de supprimer au moins un objet parmi les objets suivants : une entité de couche inférieure, une cellule de desserte ou un support radio de signalisation entre l'élément de réseau désigné et l'équipement utilisateur désigné, dans lequel l'entité de couche inférieure comprend une entité de commande de liaison radio, RLC, et une entité de commande d'accès au support, MAC.

2. Procédé selon la revendication 1, dans lequel la valeur de cause comprend au moins l'une parmi :
une première valeur de cause, qui est utilisée pour indiquer qu'une qualité de canal sans fil entre l'élément de réseau désigné et un terminal est inférieure à un premier seuil prédéterminé ;
une deuxième valeur de cause, qui est utilisée pour indiquer qu'une charge d'une entité de protocole de convergence de données en mode paquet, PDCP, et/ou d'une entité de protocole d'adaptation de données de service, SDAP, de l'élément de réseau désigné est supérieure à un deuxième seuil prédéterminé ; ou
une troisième valeur de cause, qui est utilisée pour indiquer qu'une charge de ressource radio de l'élément de réseau désigné est supérieure à un troisième seuil prédéterminé ;
dans lequel l'élément de réseau désigné est un expéditeur du premier message.

3. Procédé selon la revendication 2, dans lequel,
dans un cas où la valeur de cause comprend la première valeur de cause, le type de support du premier support radio de données ou le type de support du support radio de données sur l'élément de réseau désigné est l'un parmi : un support SCG, un support partagé SCG, un support partagé de groupe de cellules maître, MCG, ou un support inter-NB MCG ;
dans un cas où la valeur de cause comprend la deuxième valeur de cause, le type de support du premier support radio de données ou le type de support du support radio de données sur l'élément de réseau désigné est l'un parmi : le support SCG, le support partagé SCG ou un support inter-NB SCG ; et
dans un cas où la valeur de cause comprend la troisième valeur de cause, le type de support du premier support radio de données ou le type de support du support radio de données sur l'élément de réseau désigné est l'un parmi : le support SCG ou le support inter-NB MCG.

4. Procédé selon la revendication 2, dans lequel, après l'envoi (S304) du premier message au premier élément de réseau, le procédé comprend en outre :
la réception d'un deuxième message envoyé par le premier élément de réseau, dans lequel le deuxième message transporte une politique pour que le premier élément de réseau effectue la gestion de reconfiguration du type de support du premier support radio de données ou du type de support du support radio de données sur l'élément de réseau désigné.

5. Procédé selon la revendication 4, dans lequel la politique comprend au moins l'un des éléments suivants :
dans un cas où l'élément de réseau désigné doit être retenu et la valeur de cause comprend la première valeur de cause, la reconfiguration du type de support du premier support radio de données ou du type de support du support radio de données sur l'élément de réseau désigné comme étant un support inter-NB SCG ou un support MCG ;
dans un cas où l'élément de réseau désigné doit être retenu et la valeur de cause comprend la deuxième valeur de cause, la reconfiguration du type de support du premier support radio de données ou du type de support du support radio de données sur l'élément de réseau désigné comme étant l'un des trois types de support suivants : le support MCG, le support partagé MCG ou un support inter-NB MCG ;
dans un cas où l'élément de réseau désigné doit être retenu et la valeur de cause comprend la troisième valeur de cause, la reconfiguration du type de support du premier support radio de données ou du type de support du support radio de données sur l'élément de réseau désigné comme étant le support partagé MCG ou un support partagé SCG ;
la libération du type de support du premier support radio de données ou du type de support du support radio de données sur l'élément de réseau désigné ;
la libération de l'élément de réseau désigné ; et
la commutation de l'élément de réseau désigné.

6. Procédé d'envoi de politique, comprenant :
la réception (S402) d'un premier message envoyé par un élément de réseau désigné, dans lequel le premier message transporte une valeur de cause déterminée par l'élément de réseau désigné et utilisée pour libérer ou modifier un premier support radio de données ou l'élément de réseau désigné ;
la détermination (S404), en fonction de la valeur de cause, d'une politique de gestion de reconfiguration d'un type de support du premier support radio de données ou d'un type de support d'un support radio de données sur l'élément de réseau désigné ; et
l'envoi (S406) de la politique déterminée à l'élément de réseau désigné ;
**caractérisé en ce que** le procédé comprend en outre :
dans un cas où le type de support de tous les supports radio de données établis par l'élément de réseau désigné pour un équipement utilisateur désigné est un support inter-NB de groupe de cellules secondaire, SCG, qui est un support radio de données DRB ayant une interface UP qui se termine sur le deuxième élément de réseau, et une entité de couche inférieure de la pile de protocoles L2 uniquement et complètement située dans le premier élément de réseau,
l'envoi, à l'élément de réseau désigné, d'un message pour donner l'instruction à l'élément de réseau désigné d'établir ou de supprimer au moins un objet parmi les objets suivants : une entité de couche inférieure, une cellule de desserte ou un support radio de signalisation entre l'élément de réseau désigné et l'équipement utilisateur désigné, dans lequel l'entité de couche inférieure comprend une entité de commande de liaison radio, RLC, et une entité de commande d'accès au support, MAC.

7. Procédé selon la revendication 6, dans lequel la valeur de cause comprend au moins l'une parmi :
une première valeur de cause, qui est utilisée pour indiquer qu'une qualité de canal sans fil entre l'élément de réseau désigné et un terminal est inférieure à un premier seuil prédéterminé ;
une deuxième valeur de cause, qui est utilisée pour indiquer qu'une charge d'une entité de protocole de convergence de données en mode paquet, PDCP, et/ou d'une entité de protocole d'adaptation de données de service, SDAP, de l'élément de réseau désigné est supérieure à un deuxième seuil prédéterminé ; ou
une troisième valeur de cause, qui est utilisée pour indiquer qu'une charge de ressource radio de l'élément de réseau désigné est supérieure à un troisième seuil prédéterminé.

8. Procédé selon la revendication 7, dans lequel,
dans un cas où la valeur de cause comprend la première valeur de cause, le type de support du premier support radio de données ou le type de support du support radio de données sur l'élément de réseau désigné est l'un parmi : un support SCG, un support partagé SCG, un support partagé de groupe de cellules maître, MCG, ou un support inter-NB MCG ;
dans un cas où la valeur de cause comprend la deuxième valeur de cause, le type de support du premier support radio de données ou le type de support du support radio de données sur l'élément de réseau désigné est l'un parmi : le support SCG, le support partagé SCG ou un support inter-NB SCG ; et
dans un cas où la valeur de cause comprend la troisième valeur de cause, le type de support du premier support radio de données ou le type de support du support radio de données sur l'élément de réseau désigné est l'un parmi : le support SCG ou le support inter-NB MCG.

9. Procédé selon la revendication 7, dans lequel la détermination (S404) de la politique de gestion de reconfiguration du type de support du premier support radio de données ou du type de support du support radio de données sur l'élément de réseau désigné comprend au moins l'un des éléments suivants :
dans un cas où l'élément de réseau désigné doit être retenu et la valeur de cause comprend la première valeur de cause, la reconfiguration du type de support du premier support radio de données ou du type de support du support radio de données sur l'élément de réseau désigné comme étant un support inter-NB SCG ou un support MCG ;
dans un cas où l'élément de réseau désigné doit être retenu et la valeur de cause comprend la deuxième valeur de cause, la reconfiguration du type de support du premier support radio de données ou du type de support du support radio de données sur l'élément de réseau désigné comme étant l'un des trois types de support suivants : le support MCG, un support partagé MCG ou un support inter-NB MCG;
dans un cas où l'élément de réseau désigné doit être retenu et la valeur de cause comprend la troisième valeur de cause, la reconfiguration du type de support du premier support radio de données ou du type de support du support radio de données sur l'élément de réseau désigné comme étant le support partagé MCG ou un support partagé SCG ;
la libération du type de support du premier support radio de données ou du type de support du support radio de données sur l'élément de réseau désigné ;
la libération de l'élément de réseau désigné ; et
la commutation de l'élément de réseau désigné.

10. Dispositif d'envoi de message, comprenant :
un premier module de détermination (52) qui est configuré pour déterminer la libération ou la modification d'un premier support radio de données ou d'un élément de réseau désigné ; et
un module d'envoi (54), qui est configuré pour envoyer un premier message à un premier élément de réseau, dans lequel le premier message transporte une valeur de cause pour la libération ou la modification du premier support radio de données ou de l'élément de réseau désigné ; la valeur de cause est utilisée pour que le premier élément de réseau effectue une gestion de reconfiguration d'un type de support du premier support radio de données ou d'un type de support d'un support radio de données sur l'élément de réseau désigné ;
**caractérisé en ce que** le dispositif d'envoi de message comprend en outre :
un deuxième module de détermination, dans lequel dans un cas où le type de support de tous les supports radio de données établis par l'élément de réseau désigné pour un équipement utilisateur désigné est un support inter-NB de groupe de cellules secondaire, SCG, qui est un support radio de données DRB ayant une interface UP qui se termine sur le deuxième élément de réseau, et une entité de couche inférieure de la pile de protocoles L2 uniquement et complètement située dans le premier élément de réseau,
le deuxième module de détermination est configuré pour déterminer s'il faut établir ou supprimer au moins un objet parmi les objets suivants : une entité de couche inférieure, une cellule de desserte ou un support radio de signalisation entre l'élément de réseau désigné et l'équipement utilisateur désigné, dans lequel l'entité de couche inférieure comprend une entité de commande de liaison radio, RLC, et une entité de commande d'accès au support, MAC.

11. Dispositif d'envoi de politique, comprenant :
un module de réception (62), qui est configuré pour recevoir un premier message envoyé par un élément de réseau désigné, dans lequel le premier message transporte une valeur de cause déterminée par l'élément de réseau désigné et utilisée pour libérer ou modifier un premier support radio de données ou l'élément de réseau désigné ;
un module de détermination (64), qui est configuré pour déterminer, en fonction de la valeur de cause, une politique de gestion de reconfiguration d'un type de support du premier support radio de données ou d'un type de support d'un support radio de données sur l'élément de réseau désigné ; et
un premier module d'envoi (66), qui est configuré pour envoyer la politique déterminée à l'élément de réseau désigné ;
**caractérisé en ce que** le dispositif d'envoi de politique comprend en outre :
un deuxième module d'envoi, dans lequel dans un cas où le type de support de tous les supports radio de données établis par l'élément de réseau désigné pour un équipement utilisateur désigné est un support inter-NB de groupe de cellules secondaire, SCG, qui est un support radio de données DRB ayant une interface UP qui se termine sur le deuxième élément de réseau, et une entité de couche inférieure de la pile de protocoles L2 uniquement et complètement située dans le premier élément de réseau,
le deuxième module d'envoi est configuré pour envoyer, à l'élément de réseau désigné, un message pour donner l'instruction à l'élément de réseau désigné d'établir ou de supprimer au moins un objet parmi les objets suivants : une entité de couche inférieure, une cellule de desserte ou un support radio de signalisation entre l'élément de réseau désigné et l'équipement utilisateur désigné, dans lequel l'entité de couche inférieure comprend une entité de commande de liaison radio, RLC, et une entité de commande d'accès au support, MAC.

12. Support de stockage, comprenant un programme stocké, dans lequel le programme est exécuté pour mettre en œuvre le procédé selon l'une quelconque des revendications 1 à 5.

13. Processeur, le processeur étant configuré pour lancer un programme, dans lequel le programme est exécuté pour mettre en œuvre le procédé selon l'une quelconque des revendications 1 à 5.

14. Support de stockage, comprenant un programme stocké, dans lequel le programme est exécuté pour mettre en œuvre le procédé selon l'une quelconque des revendications 6 à 9.

15. Processeur, le processeur étant configuré pour lancer un programme, dans lequel le programme est exécuté pour mettre en œuvre le procédé selon l'une quelconque des revendications 6 à 9.
